# EUROPEAN PATENT SPECIFICATION

(11) **EP 3 827 961 B1**
(45) Date of publication and mention of the grant of the patent: **08.06.2022**
(21) Application number: 20210173.9
(22) Date of filing: 27.11.2020
(51) Int. Cl.: B29C 45/72, B29C 45/06, B29C 45/17, B29C 45/78

(54) **INJECTION MOLDING MACHINE**
SPRITZGIESSMASCHINE
MACHINE DE MOULAGE PAR INJECTION

(30) Priority: 29.11.2019 JP 2019217085
(43) Date of publication of application: 02.06.2021
(73) Proprietor: Sumitomo Heavy Industries, Ltd., Tokyo 141-6025 (JP)
(72) Inventor: ISHII, Tsutomu, Chiba-shi, Chiba, 263-0001, (JP); KIMURA, Yuichi, Chiba-shi, Chiba, 263-0001, (JP)
(74) Representative: Louis Pöhlau Lohrentz

(56) References cited:
- EP-A1- 3 639 999
- WO-A1-2014/117246
- JP-A- H07 195 473
- JP-A- 2001 030 323
- US-A- 6 024 558
- US-A1- 2011 293 773

## Description

### BACKGROUND OF THE INVENTION

### Field of the Invention

The present invention relates to an injection molding machine.

### Description of Related Art

Japanese Patent No. 6400057 discloses a mold rotary type injection molding machine capable of controlling temperatures of a rotary mold and a stationary mold. United States Patent Publication No. 2011/293773, Japanese Patent Publication No. H07-1955473, International Patent Publication No. WO 2014/117246, Japanese Patent Publication No. 2001-030323, and United States Patent No. 6 024 558 disclose a molding machine or an injection molding machine.

In recent years, it has been desired to increase an operating speed of an injection molding machine.

### SUMMARY OF THE INVENTION

When the injection molding machine includes various sliding surfaces, frictional heat on the sliding surface increases as an operating speed of the injection molding machine increases, and thus, there is a concern that slidability may decrease due to an influence of the frictional heat.

An aspect of the present invention provides a technique capable of suppressing a decrease in slidability.

According to an aspect of the present invention, there is provided an injection molding machine including: a first member which has a first surface; a second member which has a second surface facing the first surface; a sacrificial member which has a third surface fixed to one surface of the first surface or the second surface and sliding with the other surface of the first surface or the second surface; and a temperature adjustment mechanism which adjusts a temperature of the sacrificial member.

According to an aspect of the present invention, it is possible to suppress a decrease in slidability.

### BRIEF DESCRIPTION OF THE DRAWINGS

Fig. 1 is a view showing a state when mold opening of an injection molding machine according an embodiment is completed.
Fig. 2 is a view showing a state when a mold of the injection molding machine according to the embodiment is clamped.
Fig. 3 is a horizontal cross-sectional view showing a state of a mold unit at the time of mold clamping when a rotation angle of a rotary table according to the embodiment is 0°.
Fig. 4 is a horizontal cross-sectional view showing a state of the mold unit at the time of completion of mold opening when the rotation angle of the rotary table according to the embodiment is 0°.
Fig. 5 is a horizontal cross-sectional view showing a state of the mold unit at the time of the mold clamping when a rotation angle of a rotary table according to the embodiment is 180°.
Fig. 6 is a horizontal cross-sectional view showing a state of the mold unit at the time of the completion of the mold opening when the rotation angle of the rotary table according to the embodiment is 180°.
Fig. 7 is a vertical cross-sectional view showing the state of the mold unit at the time of the mold clamping when the rotation angle of the rotary table according to the embodiment is 0°, and is a vertical cross-sectional view taken along a rotation center line of the rotary table.
Fig. 8 is a view showing a slide plate according to a first embodiment.
Fig. 9 is a view showing a state of a flexible holder when the rotation angle of the rotary table according to the embodiment is 0°.
Fig. 10 is a view showing a state of a flexible holder when the rotation angle of the rotary table according to the embodiment is 180°.
Fig. 11 is a view showing a slide plate fixed to a rotary table according to a first modification example of the first embodiment.
Fig. 12 is a vertical cross-sectional view showing a temperature control circuit according to a second modification example of the first embodiment, and is a vertical cross-sectional view taken along a rotation center line of a rotary table.
Fig. 13 is a vertical cross-sectional view showing a temperature control circuit according to a second embodiment, and is a vertical cross-sectional view taken along a rotation center line of a rotary table.
Fig. 14 is a vertical cross-sectional view showing a temperature control circuit according to a modification example of the second embodiment, and is a vertical cross-sectional view taken along a rotation center line of a rotary table.
Fig. 15 is a vertical cross-sectional view showing a slide block of a platen carriage according to a third embodiment.
Fig. 16 is a vertical cross-sectional view showing a slide block of a platen carriage according to a fourth embodiment.

### DETAILED DESCRIPTION OF THE INVENTION

Hereinafter, embodiments of the present invention are described with reference to the drawings. In each drawing, the same or corresponding reference numerals are assigned to the same or corresponding configurations, and descriptions thereof are omitted.

### (Injection Molding Machine)

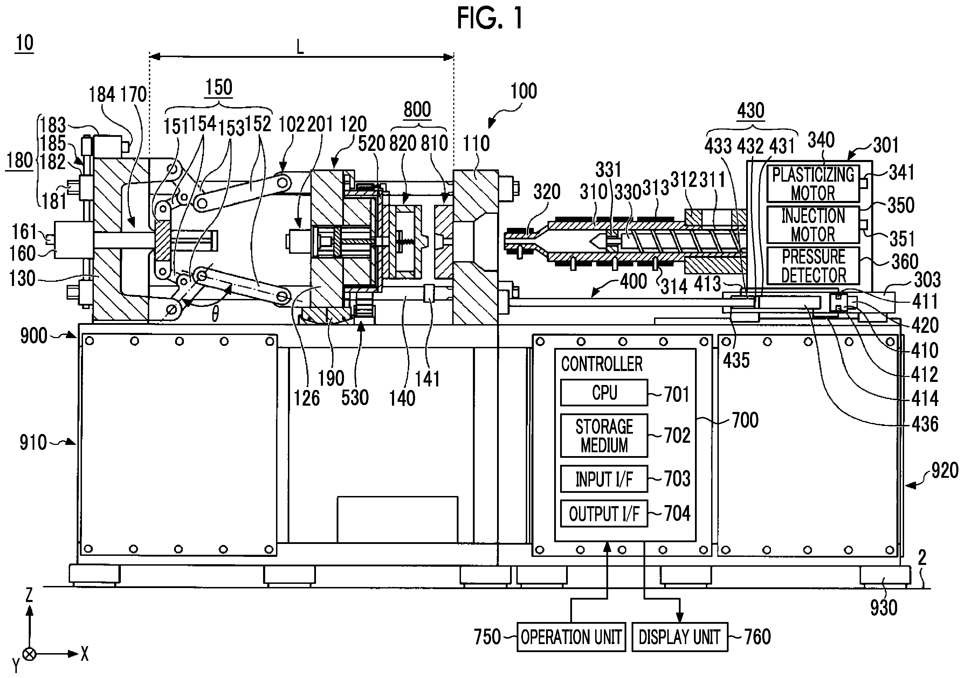

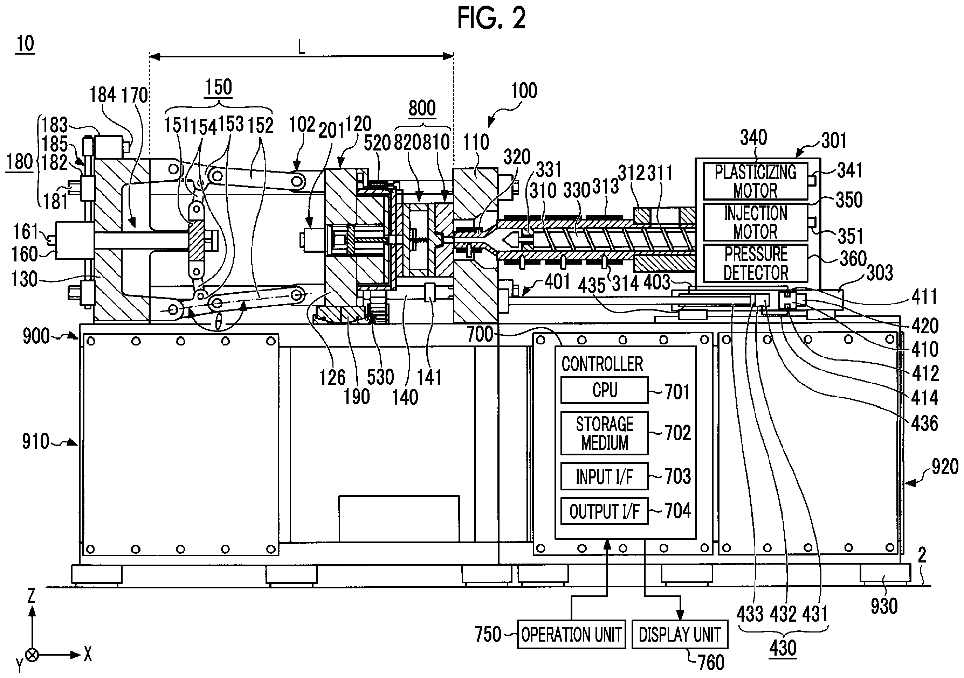

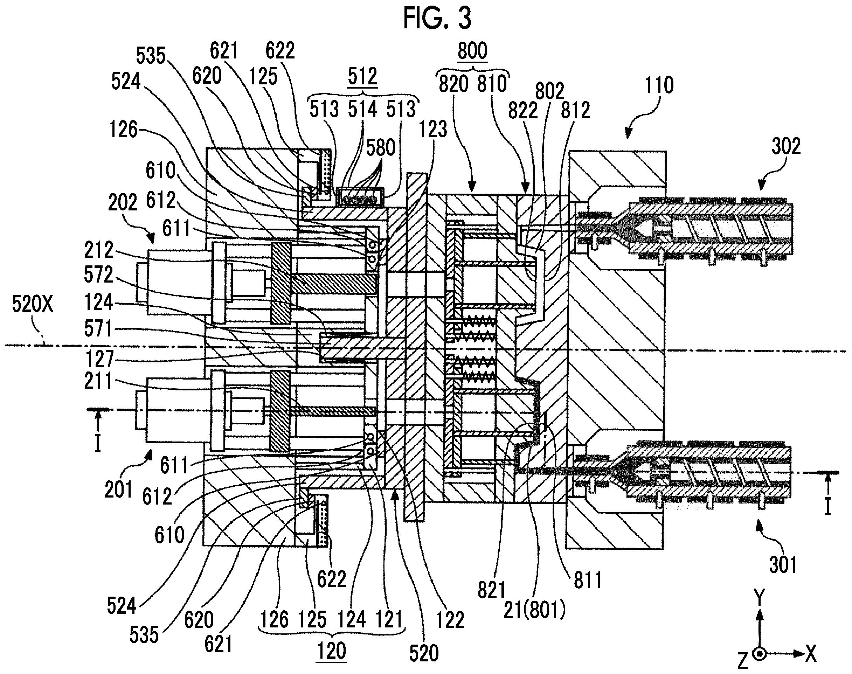

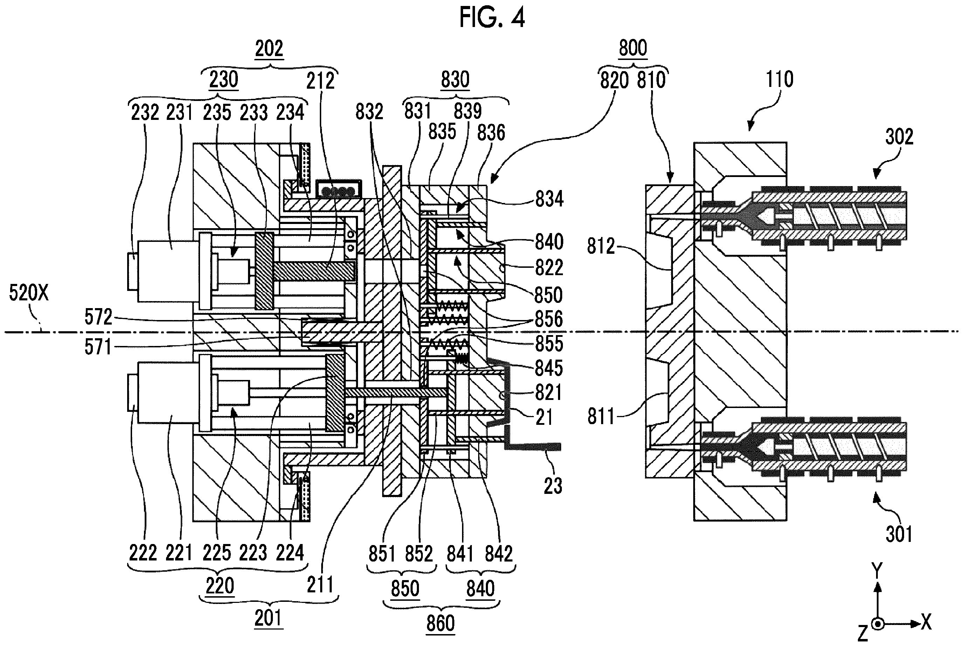

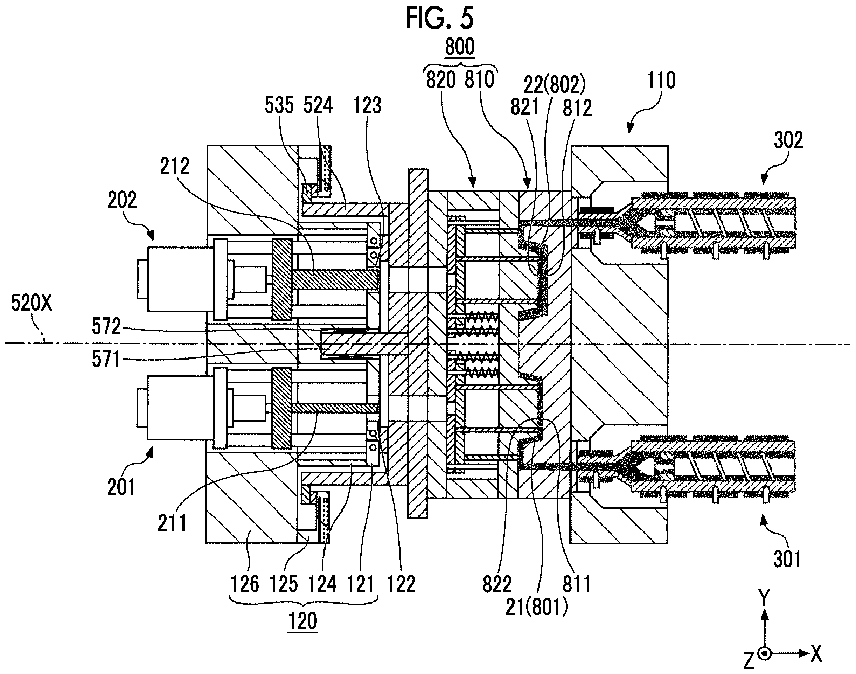

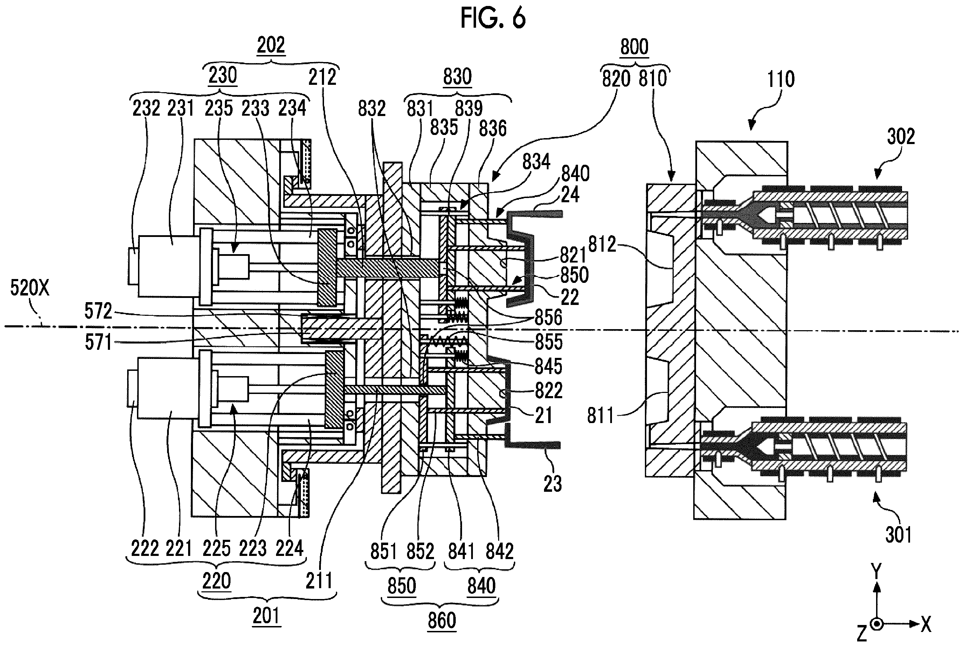

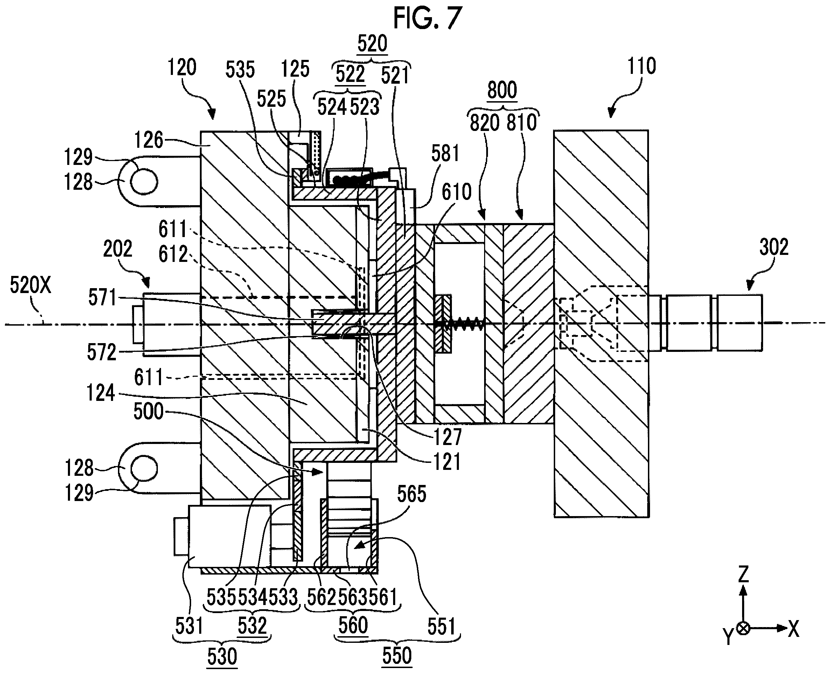

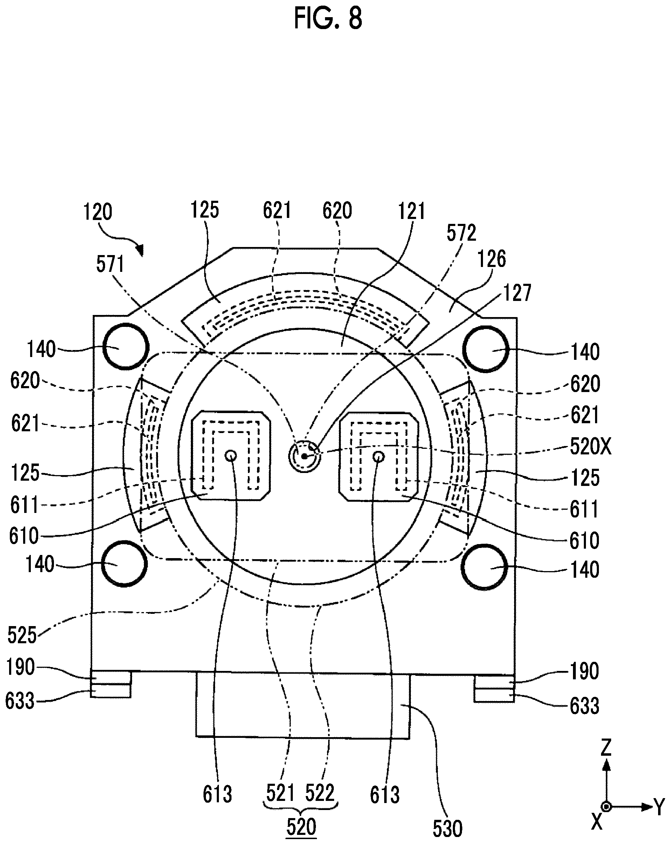

Fig. 1 is a view showing a state when mold opening of an injection molding machine according an embodiment is completed. Fig. 2 is a view showing a state when a mold of the injection molding machine according to the embodiment is clamped. Fig. 3 is a horizontal cross-sectional view showing a state of a mold unit at the time of mold clamping when a rotation angle of a rotary table according to the embodiment is 0°. Fig. 4 is a horizontal cross-sectional view showing a state of the mold unit at the time of completion of mold opening when the rotation angle of the rotary table according to the embodiment is 0°. Fig. 5 is a horizontal cross-sectional view showing a state of the mold unit at the time of the mold clamping when a rotation angle of a rotary table according to the embodiment is 180°. Fig. 6 is a horizontal cross-sectional view showing a state of the mold unit at the time of the completion of the mold opening when the rotation angle of the rotary table according to the embodiment is 180°. Fig. 7 is a vertical cross-sectional view showing the state of the mold unit at the time of the mold clamping when the rotation angle of the rotary table according to the embodiment is 0°, and is a vertical cross-sectional view taken along a rotation center line of the rotary table. Fig. 8 is a view showing a slide plate according to a first embodiment. Moreover, Figs. 1 and 2 are vertical cross-sectional views taken along line I-I of Fig. 3.

In the present specification, an X-axis direction, a Y-axis direction, and a Z-axis direction are directions perpendicular to each other. The X-axis direction and the Y-axis direction indicate a horizontal direction, and the Z-axis direction indicates a vertical direction. In a case where a mold clamping unit 100 is a horizontal type mold clamping unit, the X-axis direction is mold opening and closing directions, and the Y-axis direction is a width direction of an injection molding machine 10. A negative side in the Y-axis direction is referred to as an operation side, and a positive side in the Y-axis direction is referred to as a counter operation side.

As shown in Figs. 1 to 7, the injection molding machine 10 includes a mold clamping unit 100 which opens or closes a mold unit 800, and a first ejector unit 201 which ejects a first unnecessary item 23 molded by the mold unit 800, a second ejector unit 202 which ejects both a second molding product 22 and a second unnecessary item 24 molded by the mold unit 800, a first injection unit 301 which injects a molding material into the mold unit 800, and a mold, a second injection unit 302 which injects the molding material into the mold unit 800, a first moving unit 401 which moves the first injection unit 301 forward or rearward with respect to the mold unit 800, a second moving unit (not shown) which moves the second injection unit 302 forward or rearward with respect to the mold unit 800, a controller 700 which controls each component of the injection molding machine 10, and a frame 900 which supports each component of the injection molding machine 10. The frame 900 includes a mold clamping unit frame 910 and an injection unit frame 920. The mold clamping unit frame 910 and the injection unit frame 920 are installed on a floor 2 via a leveling adjuster 930, respectively. The controller 700 is disposed in an internal space of the injection unit frame 920. Hereinafter, each component of the injection molding machine 10 will be described.

### (Mold Clamping Unit)

In descriptions of the mold clamping unit 100, a movement direction (for example, X-axis positive direction) of a movable platen 120 when a mold is closed is defined as a front side, and a movement direction (for example, X-axis negative direction) of the movable platen 120 when the mold is opened is defined as a rear side.

The mold clamping unit 100 performs mold closing, pressurization, mold clamping, depressurization, and mold opening of the mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 has a stationary platen 110, the movable platen 120 which is disposed to be movable in the mold opening and closing directions with respect to the mold clamping unit frame 910, a rotary table 520 which is rotatably supported by the movable platen 120 via a slide plate 610 (refer to Figs. 3 and 7), a rotary mechanism 530 which rotates the rotary table 520, and a moving mechanism 102 which moves the movable platen 120 forward or rearward with respect to the stationary platen 110. The stationary platen 110 is fixed to the mold clamping unit frame 910.

The stationary platen 110 is fixed to the mold clamping unit frame 910. The stationary mold 810 is attached to a surface of the stationary platen 110 facing the movable platen 120. As shown in Fig. 3, the stationary mold 810 has a first stationary molding surface 811 and a second stationary molding surface 812 on a surface facing the movable mold 820.

The first stationary molding surface 811 is a portion of a surface which forms the first cavity space 801 in which a first molding product 21 is molded. Meanwhile, the second stationary molding surface 812 is a portion of a surface which forms a second cavity space 802 in which a second molding product 22 is molded.

The first stationary molding surface 811 and the second stationary molding surface 812 are formed in different shapes, and are respectively formed in a concave shape, for example. The stationary mold 810 has a plurality of plates (not shown) laminated in the mold opening and closing directions. Of the plurality of plates constituting the stationary mold 810, a plate which comes into contact with the movable mold 820 is referred to as a template. The first stationary molding surface 811 and the second stationary molding surface 812 are formed by a single template, but each may be formed by an individual template.

The movable platen 120 is disposed to be movable in the mold opening and closing directions with respect to the mold clamping unit frame 910. A rear block 126 of the movable platen 120 is supported by a platen carriage 190. The platen carriage 190 is placed on the mold clamping unit frame 910 so that the rear block 126 can be moved. The movable mold 820 is attached to a surface of the movable platen 120 facing the stationary platen 110 via the rotary table 520. As shown in Figs. 3 to 8, the movable platen 120 rotatably supports a rotary shaft 571 of the rotary table 520 via a bearing 572.

The movable mold 820 has a first movable molding surface 821 and a second movable molding surface 822 on a surface facing the stationary mold 810. As shown in Figs. 3 and 5, the first movable molding surface 821 and the second movable molding surface 822 form a portion of the surface forming the first cavity space 801 and a portion of the surface forming the second cavity space 802 in order, respectively.

The first movable molding surface 821 and the second movable molding surface 822 are formed in the same shape, and are respectively formed in a convex shape, for example. The movable mold 820 has a plurality of plates laminated in the mold opening and closing directions. Of the plurality of plates constituting the movable mold 820, a plate which comes into contact with the stationary mold 810 is referred to as a template. The first movable molding surface 821 and the second movable molding surface 822 are formed by a single template, but each may be formed by an individual template.

Moreover, in the present embodiment, the first stationary molding surface 811 and the second stationary molding surface 812 are formed in a concave shape, and the first movable molding surface 821 and the second movable molding surface 822 are formed in a convex shape. However, the present invention is not limited to this. That is, the first stationary molding surface 811 and the second stationary molding surface 812 may be formed in a convex shape, and the first movable molding surface 821 and the second movable molding surface 822 may be formed in a concave shape.

The rotary table 520 is rotatably attached to the movable platen 120 via the slide plate 610. A rotation center line 520X of the rotary table 520 is parallel to the mold opening and closing directions. For example, the rotary table 520 may be made of cast iron.

The rotary mechanism 530 (refer to Fig. 7) rotates the rotary table 520. The rotary mechanism 530 includes a rotary motor 531 and a transmission mechanism 532 which transmits a rotational driving force of the rotary motor 531 to the rotary table 520. For example, although described in detail later, the transmission mechanism 532 includes a drive gear 533, an intermediate gear 534, and a driven gear 535. The intermediate gear 534 may not be provided, and the drive gear 533 and the driven gear 535 may be connected to each other.

Every time the rotary table 520 is rotated by 180°, a rotation direction of the rotary table 520 may be reversed. For example, the rotary mechanism 530 rotates the rotary table 520 clockwise by 180° and then rotates the rotary table 520 counterclockwise by 180°. Since dispositions of a wire and a pipe fixed to the rotary table 520 are restored, the wire and the pipe can be easily routed.

As shown in Fig. 3, at the time of mold clamping, the first movable molding surface 821 and the first stationary molding surface 811 form the first cavity space 801, and the second movable molding surface 822 and the second stationary molding surface 812 form the second cavity space 802. A molding material is supplied from the first injection unit 301 to the first cavity space 801 to mold the first molding product 21. Subsequently, mold opening is performed.

Next, as shown in Fig. 4, the first ejector unit 201 ejects the first unnecessary item 23 from the movable mold 820. The first unnecessary item 23 is solidified inside the mold unit 800 together with the first molding product 21. Subsequently, the rotary mechanism 530 rotates the rotary table 520 by 180°. Along with the rotation of the rotary table 520, the movable mold 820 is rotated by 180°. In this case, the first molding product 21 is rotated by 180° together with the movable mold 820 without being ejected from the movable mold 820. After that, mold clamping is performed as shown in Fig. 5.

As shown in Fig. 5, at the time of the mold clamping, the second movable molding surface 822 and the first stationary molding surface 811 form the first cavity space 801, and the first movable molding surface 821 and the second stationary molding surface 812 form the second cavity space 802. As described above, the first molding product 21 is disposed in a portion of the second cavity space 802. A molding material is supplied from the second injection unit 302 to a remaining portion of the second cavity space 802, and the second molding product 22 is molded. The second molding product 22 will be described as including the first molding product 21. The first molding product 21 is molded in parallel with the molding of the second molding product 22. The first molding product 21 is molded in the first cavity space 801. Subsequently, mold opening is performed.

Next, as shown in Fig. 6, the second ejector unit 202 ejects both the second molding product 22 and the second unnecessary item 24 from the movable mold 820. The second unnecessary item 24 is solidified inside the mold unit 800 together with the second molding product 22. The second unnecessary item 24 is ejected from the movable mold 820, and thereafter, is separated from the second molding product 22. The ejection of the first unnecessary item 23 is performed in parallel with the ejection of both the second molding product 22 and the second unnecessary item 24. After that, the mold opening is performed, and the rotary table 520 is rotated by 180° again.

As mainly shown in Figs. 3 and 5, the movable platen 120 has a front plate 121 which rotatably supports the rotary table 520 inside via a slide plate 610, an intermediate block 124 which is disposed radially inside a cylindrical portion 524 of the rotary table 520, a gear restraint block 125 which is disposed outside the intermediate block 124 when viewed in the mold opening and closing directions, a rear block 126 which is provided behind the intermediate block 124, and a toggle link attachment portion 128 (refer to Fig. 7) which is provided on a rear end surface of the rear block 126. The front plate 121, the intermediate block 124, the rear block 126, and the toggle link attachment portion 128 may be formed separately and connected, or may be integrally formed by casting or the like. For example, the movable platen 120 may be made of cast iron.

The front plate 121 rotatably supports the rotary table 520 via the slide plate 610. The front plate 121 includes a first rod hole 122 which penetrates the front plate 121 in the mold opening and closing directions. The first ejector rod 211 is disposed in the first rod hole 122 so as to be movable forward or rearward. Further, the front plate 121 includes a second rod hole 123 which penetrates the front plate 121 in the mold opening and closing directions. The second ejector rod 212 is disposed in the second rod hole 123 so as to be movable forward or rearward.

The intermediate block 124 is disposed radially inside the cylindrical portion 524 of the rotary table 520. For example, the intermediate block 124 has a columnar shape which is accommodated inside the cylindrical portion 524 of the rotary table 520 when viewed in the mold opening and closing directions. A space in which the first ejector unit 201 is disposed and a space in which the second ejector unit 202 is disposed are formed inside the intermediate block 124. The front plate 121 is attached to a front end surface of the intermediate block 124. The front plate 121 and the intermediate block 124 include insertion holes 127 into which the rotary shaft 571 of the rotary table 520 is inserted via the bearing 572.

The rear block 126 is provided behind the intermediate block 124 and is supported by the platen carriage 190 (refer to Figs. 1 and 2). For example, the rear block 126 has a rectangular shape. A space in which the first ejector unit 201 is disposed and a space in which the second ejector unit 202 is disposed are formed inside the rear block 126. An intermediate block 124 is attached to a front end surface of the rear block 126.

The gear restraint block 125 is disposed in front of the rear block 126. The gear restraint block 125 is disposed outside the intermediate block 124 when viewed in the mold opening and closing directions. The gear restraint block 125 restrains a forward movement of the driven gear 535 via the slide plate 620. The gear restraint block 125 can prevent the rotary table 520 from falling over.

A pair of the toggle link attachment portions 128 (refer to Fig. 7) are provided vertically on the rear end surface of the rear block 126. Each of the pair of toggle link attachment portions 128 has a plurality of toggle link attachment plates of which thickness directions face the horizontal direction at intervals in the horizontal direction. Each of the plurality of toggle link attachment plates protrudes rearward from the rear end surface of the rear block 126, and has a pin hole 129 at a distal end portion thereof. A pin is inserted through the pin hole 129, and a first link 152 (refer to Figs. 1 and 2) is oscillatingly attached to the toggle link attachment portion 128 via the pin.

As shown in Fig. 8, for example, the slide plate 610 is detachably fixed on a front end surface of the front plate 121 by using bolts 613. A plurality (for example, two) of the slide plates 610 may be used. A material of the slide plate 610 is a material softer than a disk portion 523 of the rotary table 520, for example, a copper alloy such as copper or brass. A temperature control circuit 611 through which a temperature control medium for adjusting the temperature of the slide plate 610 flows is formed on the front plate 121 and the rear block 126. For example, the temperature control circuit 611 has one end portion and the other end portion near a lower end of the slide plate 610 when viewed in the mold opening and closing directions. Moreover, in the temperature control circuit 611 extends upward from the one end portion and the other end portion, and a portion extending upward from the one end portion and a portion extending upward from the other end are connected to each other near an upper end of the slide plate 610. The temperature control circuit 611 may have one end portion near the lower end of the slide plate 610 and the other end portion near the upper end of the slide plate 610 and meander between them. The temperature control circuit 611 may be provided near a central portion of the slide plate 610 when viewed in mold opening and closing directions. As the temperature control medium, for example, water is used. The temperature control medium is supplied into the temperature control circuit 611 from a feed port of the temperature control circuit 611, exchanges heat with the movable platen 120 and the slide plate 610, and is discharged from a discharge port of the temperature control circuit 611. Further, a temperature sensor 612 is provided in the front plate 121 and the rear block 126. The temperature sensor 612 sends a signal indicating a detection result to the controller 700. The controller 700 can estimate the temperature of the slide plate 610 from the signal sent from the temperature sensor 612.

As shown in Fig. 8, the slide plate 620 is detachably fixed on a surface of the gear restraint block 125 facing the driven gear 535 by using, for example, a bolt (not shown) . A rear end surface of the slide plate 620 is in contact with the front end surface of the driven gear 535. Although details will be described later, the rear end surface of the slide plate 620 and the front end surface of the driven gear 535 slide with each other during a mold rotation process. Therefore, a lubricating oil may be supplied between the rear end surface of the slide plate 620 and the front end surface of the driven gear 535. A plurality (for example, three) of the gear restraint block 125 and the slide plate 620 may be used. For example, a material of the slide plate 620 is a copper alloy such as brass. A temperature control circuit 621 through which a temperature control medium for adjusting the temperature of the slide plate 620 flows is formed in the gear restraint block 125. As the temperature control medium, for example, water is used. The temperature control medium is supplied into the temperature control circuit 621 from a feed port of the temperature control circuit 621, exchanges heat with the movable platen 120 and the slide plate 620, and is discharged from a discharge port of the temperature control circuit 621. Further, a temperature sensor 622 is provided in the gear restraint block 125. The temperature sensor 622 sends a signal indicating a detection result to the controller 700. The controller 700 can estimate the temperature of the slide plate 620 from the signal sent from the temperature sensor 622.

The moving mechanism 102 (refer to Figs. 1 and 2) moves the movable platen 120 forward or rearward with respect to the stationary platen 110, and thus, the mold closing, pressurization, mold clamping, depressurization, and mold opening of the mold unit 800 are performed. The moving mechanism 102 includes a toggle support 130, a tie bar 140, a toggle mechanism 150, a mold clamping motor 160, a motion conversion mechanism 170, and a mold space adjustment mechanism 180.

The toggle support 130 is disposed so as to be separated from the stationary platen 110, and is placed on the mold clamping unit frame 910 to be movable in mold opening and closing directions. In addition, the toggle support 130 may be movably disposed along a guide which is placed on the mold clamping unit frame 910.

In addition, in the present embodiment, the stationary platen 110 is fixed to the mold clamping unit frame 910, and the toggle support 130 is movably disposed in the mold opening and closing directions with respect to the mold clamping unit frame 910. However, the toggle support 130 may be fixed to the mold clamping unit frame 910, and the stationary platen 110 may be movably disposed in the mold opening and closing directions with respect to the mold clamping unit frame 910.

The stationary platen 110 and the toggle support 130 are connected to each other at an interval L in the mold opening and closing directions by the tie bar 140. A plurality of (for example, four) tie bars 140 may be used. The plurality of tie bars 140 are disposed to be parallel in the mold opening and closing directions and extend according to a mold clamping force . A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressurization process, a mold clamping process, a depressurization process, a mold opening process, an ejection process, the mold rotation process, or the like under the control of the controller 700. The mold rotation process is performed after completion of the mold opening process and before start of the next mold closing process. In the present embodiment, the mold rotation process is performed after completion of the ejection process, but it may be performed before the completion of the ejection process. For example, when a position at which the second molding product 22 is molded and a position at which the second molding product 22 is ejected are different form each other, the mold rotation process is performed after the completion of the mold opening process, and then an ejection process is performed. Specifically, for example, when the position at which the second molding product 22 is molded is on an operation side and the position at which the second molding product 22 is ejected is on a counter operation side, the mold rotation process is formed after the completion of the mold opening process, and then the ejection process is performed.

In the mold closing process, the mold clamping motor 160 is driven to move the crosshead 151 forward to a mold closing completion position at a set movement speed. Accordingly, the movable platen 120 moves forward and the movable mold 820 touches the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurization process, the mold clamping motor 160 is further driven to further move the crosshead 151 forward from the mold closing completion position to a mold clamping position, and thus, a mold clamping force is generated.

In the mold clamping process, the mold clamping motor 160 is driven to maintain the position of the crosshead 151 at the mold clamping position. In the mold clamping process, the mold clamping force generated in the pressurization process is maintained. In the mold clamping process, the first cavity space 801 and the second cavity space 802 are formed between the movable mold 820 and the stationary mold 810.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other.

In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810.

After the completion of the mold opening process and before the start of the next mold closing process, the ejection process is performed. In the ejection process, the first ejector unit 201 ejects the first unnecessary item 23 from the movable mold 820. The first molding product 21 solidified together with the first unnecessary item 23 is not ejected from the movable mold 820. Further, in the ejection process, the second ejector unit 202 ejects both the second molding product 22 and the second unnecessary item 24 from the movable mold 820. After the completion of the ejection process and before the start of the next mold closing process, the mold rotation process is performed.

In the mold rotation process, the rotary table 520 is rotated, and the first molding product 21 is rotated together with the movable mold 820. After that, the mold closing process and the pressurization process are performed, and thus, the first molding product 21 is disposed in the second cavity space 802.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are disposed in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are disposed in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the interval L between the stationary platen 110 and the toggle support 130 is adjusted such that the link angle θ of the toggle mechanism 150 at the time of a touch type where the movable mold 820 touches the stationary mold 810 becomes a predetermined angle.

The mold clamping unit 100 has a mold space adjustment mechanism 180. The mold space adjustment mechanism 180 performs the mold space adjustment by adjusting the interval L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a central portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the interval L between the stationary platen 110 and the toggle support 130 is adjusted. In addition, a plurality of mold space adjustment mechanisms may be used in combination.

The interval L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the interval L. In addition, a toggle support position detector which detects the position of the toggle support 130 and an interval detector which detects the interval L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (First Ejector Unit and Second Ejector Unit)

Similarly to the descriptions of the mold clamping unit 100, in descriptions of the first ejector unit 201 and the second ejector unit 202, the movement direction (for example, X-axis positive direction) of the movable platen 120 when the mold is closed is defined as the front side, and the movement direction (for example, X-axis negative direction) of the movable platen 120 when the mold is opened is defined as the rear side.

The first ejector unit 201 and the second ejector unit 202 move forward or rearward together with the movable platen 120. As shown in Fig. 4, the first ejector unit 201 ejects the first unnecessary item 23 from the movable mold 820. The first ejector unit 201 does not eject the first molding product 21 solidified together with the first unnecessary item 23 from the movable mold 820. As shown in Fig. 6, the second ejector unit 202 ejects both the second molding product 22 and the second unnecessary item 24 from the movable mold 820.

The first ejector unit 201 and the second ejector unit 202 are disposed at intervals in the Y-axis direction. This is because the first cavity space 801 and the second cavity space 802 are disposed at intervals in the Y-axis direction.

For example, the first cavity space 801 and the first ejector unit 201 are disposed on the operation side. The second cavity space 802 and the second ejector unit 202 are disposed on the counter operation side. The second molding product 22 can be taken out to the counter operation side.

First, a configuration of the movable mold 820 will be described mainly with reference to Figs. 4 and 6. The movable mold 820 has a stationary portion 830 fixed to the movable platen 120 and a movable portion 860 which can move forward or rearward in the stationary portion 830. The movable portion 860 has a first movable portion 840 and a second movable portion 850.

The stationary portion 830 is formed in rotational symmetry (for example, 180° rotational symmetry) about the rotation center line 520X of the rotary table 520. The stationary portion 830 includes a movable attachment plate 831 which is attached to the rotary table 520, a spacer block 835 which forms a space 834 in front of the movable attachment plate 831, a movable template 836 which is fixed to the movable attachment plate 831 via the spacer block 835, and a guide pin 839.

A through-hole 832 into which the first ejector rod 211 and the second ejector rod 212 are inserted and removed in order is formed in the movable attachment plate 831. A diameter of the through-hole 832 is larger than a diameter of the first ejector rod 211 and a diameter of the second ejector rod 212. The through-holes 832 are disposed in rotational symmetry (for example, 180° rotational symmetry) about the rotation center line 520X of the rotary table 520.

The spacer block 835 forms the space 834 between the movable attachment plate 831 and the movable template 836. In this space 834, a first ejector plate 841 described later and a second ejector plate 851 described later are disposed in the space 834 so as to be movable forward or rearward.

The movable template 836 has the first movable molding surface 821 and the second movable molding surface 822 on a surface facing the stationary mold 810. The first movable molding surface 821 and the second movable molding surface 822 form a portion of a surface forming the first cavity space 801 and a portion of a surface forming the second cavity space 802 in order, respectively.

A plurality of (for example, a pair of) the first movable portions 840 are disposed in rotational symmetry (for example, 180° rotational symmetry) about the rotation center line 520X of the rotary table 520. Both the first unnecessary item 23 and the second unnecessary item 24 can be ejected by the first movable portion 840. For example, the first movable portion 840 includes a first ejector plate 841 which is disposed perpendicular to the mold opening and closing directions, and a rod-shaped first ejector pin 842 which extends forward from the first ejector plate 841.

The first ejector plate 841 is disposed in the space 834 between the movable attachment plate 831 and the movable template 836. The first ejector plate 841 moves forward or rearward along a guide pin 839 parallel to the mold opening and closing directions. The first ejector plate 841 is biased by the first return spring 845 in a direction away from the movable template 836.

The first ejector pin 842 is disposed to be movable forward or rearward in a first pin hole which penetrates the movable template 836 in the mold opening and closing directions. A front end surface of the first ejector pin 842 abuts on the first unnecessary item 23 or the second unnecessary item 24.

Similarly to the first movable portion 840, a plurality of (for example, a pair of) the second movable portions 850 are disposed in rotational symmetry (for example, 180° rotational symmetry) about the rotation center line 520X of the rotary table 520. For example, the second movable portion 850 includes a second ejector plate 851 which is disposed perpendicular to the mold opening and closing directions, and a rod-shaped second ejector pin 852 which extends forward from the second ejector plate 851.

The second ejector plate 851 is disposed in the space 834 between the movable attachment plate 831 and the movable template 836. The second ejector plate 851 moves forward or rearward along a guide pin 839 parallel to the mold opening and closing directions . The second ejector plate 851 is biased by the second return spring 855 in a direction away from the movable template 836.

The second ejector plate 851 is disposed between the movable attachment plate 831 and the first ejector plate 841. When the second ejector plate 851 moves forward or rearward, the first ejector plate 841 moves forward or rearward together with the second ejector plate 851.

The second ejector plate 851 includes a through-hole 856 which penetrates the second ejector plate 851 in the mold opening and closing directions. A diameter of the through-hole 856 is smaller than a diameter of the second ejector rod 212. The second ejector rod 212 pushes the second ejector plate 851 forward without passing through the through-hole 856 of the second ejector plate 851.

The diameter of the through-hole 856 of the second ejector plate 851 is larger than a diameter of the first ejector rod 211. The first ejector rod 211 passes through the through-hole 856 of the second ejector plate 851 and pushes the first ejector plate 841 forward.

The second ejector pin 852 is disposed to be movable forward or rearward in a second pin hole which penetrates the movable template 836 in the mold opening and closing directions. A front end surface of the second ejector pin 852 abuts on the first molding product 21 or the second molding product 22.

Next, a configuration of the first ejector unit 201 will be described mainly with reference to Fig. 4. The first ejector unit 201 has a first ejector rod 211 which moves forward or rearward with respect to the stationary portion 830 of the movable mold 820. The first ejector rod 211 is not connected to the first movable portion 840 and the second movable portion 850 of the movable mold 820. The movable mold 820 can be rotated after the first ejector rod 211 is separated from the movable mold 820.

The first ejector unit 201 has a first drive mechanism 220 which moves the first ejector rod 211 forward or rearward. For example, the first drive mechanism 220 includes a first ejector motor 221, a first crosshead 223, and a first motion conversion mechanism 225 which converts a rotary motion of the first ejector motor 221 into a linear motion of the first crosshead 223.

The first motion conversion mechanism 225 includes a screw shaft and a screw nut which is screwed to the screw shaft. A ball or a roller may be interposed between the screw shaft and the screw nut. The first crosshead 223 moves in the mold opening and closing directions along a first guide bar 224. A rear end portion of the first ejector rod 211 is attached to the first crosshead 223, and the first ejector rod 211 moves forward or rearward together with the first crosshead 223.

As shown in Fig. 4, when the first drive mechanism 220 moves the first ejector rod 211 forward, the first ejector rod 211 passes through the through-hole 832 of the movable attachment plate 831 and the through-hole 856 of the second ejector plate 851 and pushes the first ejector plate 841 forward. As a result, the first ejector plate 841 moves forward against a biasing force of the first return spring 845. Therefore, the first ejector pin 842 moves forward, and the first unnecessary item 23 is ejected from the movable mold 820.

As shown in Fig. 4, while the first drive mechanism 220 moves the first ejector plate 841 together with the first ejector rod 211 forward, the second ejector plate 851 is pressed to a rearward-movement limit position by a biasing force of the second return spring 855 and does not move forward. Therefore, when the first unnecessary item 23 is ejected from the movable mold 820, the first molding product 21 is not ejected from the movable mold 820.

After that, when the first drive mechanism 220 moves the first ejector rod 211 rearward, the first ejector plate 841 is moved rearward to the rearward-movement limit position by the biasing force of the first return spring 845. When the first ejector plate 841 reaches the rearward-movement limit position, the front end surface of the first ejector pin 842 is flush with the front end surface of the movable mold 820.

The controller 700 controls a position of the first ejector rod 211 when the first ejector rod 211 is moved forward or rearward. For example, the position of the first ejector rod 211 is detected using a first ejector motor encoder 222. The first ejector motor encoder 222 detects a rotation of the first ejector motor 221 and sends a signal indicating a detection result to the controller 700. In addition, a first ejector rod position detector which detects the position of the first ejector rod 211 is not limited to the first ejector motor encoder 222, and can use a general detector.

Next, a configuration of the second ejector unit 202 will be described mainly with reference to Fig. 6. The second ejector unit 202 has a second ejector rod 212 which moves forward or rearward with respect to the stationary portion 830 of the movable mold 820. The second ejector rod 212 is not connected to the first movable portion 840 and the second movable portion 850 of the movable mold 820. The movable mold 820 can be rotated after the second ejector rod 212 is separated from the movable mold 820.

The second ejector unit 202 has a second drive mechanism 230 which moves the second ejector rod 212 forward or rearward. For example, the second drive mechanism 230 includes a second ejector motor 231, a second crosshead 233, and a second motion conversion mechanism 235 which converts a rotary motion of the second ejector motor 231 into a linear motion of the second crosshead 233.

The second motion conversion mechanism 235 includes a screw shaft and a screw nut which is screwed to the screw shaft. A ball or a roller may be interposed between the screw shaft and the screw nut. The second crosshead 233 moves in the mold opening and closing directions along a second guide bar 234. A rear end portion of the second ejector rod 212 is attached to the second crosshead 233, and the second ejector rod 212 moves forward or rearward together with the second crosshead 233.

As shown in Fig. 6, when the second drive mechanism 230 moves the second ejector rod 212 forward, the second ejector rod 212 passes through the through-hole 832 of the movable attachment plate 831 and pushes an edge portion of the through-hole 856 of the second ejector plate 851 forward. As a result, the second ejector plate 851 moves forward against a biasing force of the second return spring 855. Therefore, the second ejector pin 852 moves forward and ejects the second molding product 22 from the movable mold 820.

While the second drive mechanism 230 moves the second ejector plate 851 forward together with the second ejector rod 212, the first ejector plate 841 moves forward against the biasing force of the first return spring 845. Therefore, the first ejector pin 842 moves forward, and the second unnecessary item 24 is ejected from the movable mold 820.

After that, when the second drive mechanism 230 moves the second ejector rod 212 rearward, the second ejector plate 851 is moved rearward to the rearward-movement limit position by the biasing force of the second return spring 855. When the second ejector plate 851 reaches the rearward-movement limit position, the front end surface of the second ejector pin 852 is flush with the front end surface of the movable mold 820.

While the second ejector plate 851 moves rearward, the first ejector plate 841 is moved rearward to the rearward-movement limit position by the biasing force of the first return spring 845. When the first ejector plate 841 reaches the rearward-movement limit position, the front end surface of the first ejector pin 842 is flush with the front end surface of the movable mold 820.

The controller 700 controls the position of the second ejector rod 212 when the second ejector rod 212 is moved forward or rearward. For example, the position of the second ejector rod 212 is detected using a second ejector motor encoder 232. The second ejector motor encoder 232 detects a rotation of the second ejector motor 231 and sends a signal indicating a detection result to the controller 700. Moreover, the second ejector rod position detector which detects the position of the second ejector rod 212 is not limited to the second ejector motor encoder 232, and can use a general detector.

### (Rotary Table)

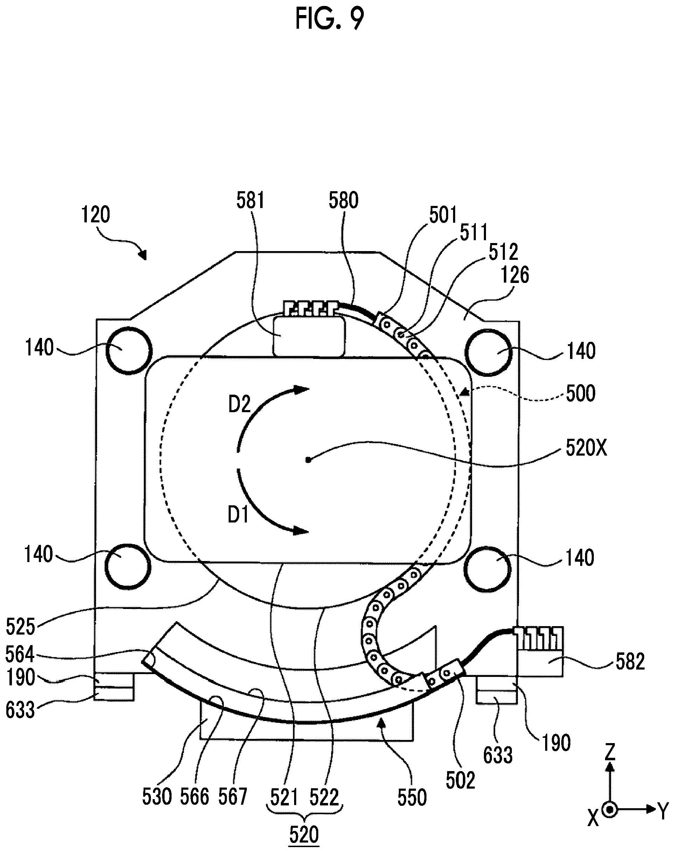

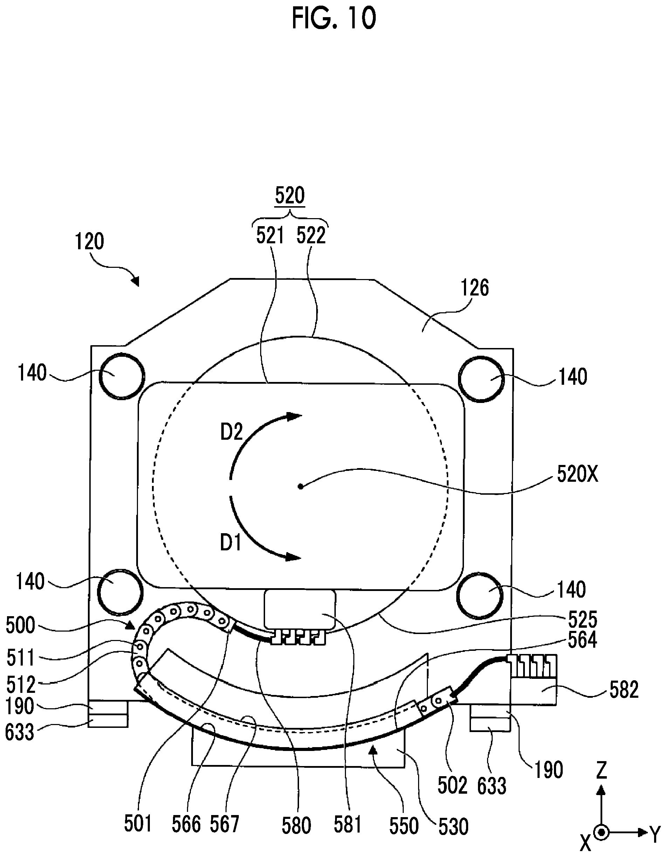

Similarly to the descriptions of the mold clamping unit 100 or the like, in descriptions of the rotary table 520, the movement direction (for example, X-axis positive direction) of the movable platen 120 when the mold is closed is defined as the front side, and the movement direction (for example, X-axis negative direction) of the movable platen 120 when the mold is opened is defined as the rear side. Fig. 9 is a view showing a state of a flexible holder when the rotation angle of the rotary table according to the embodiment is 0°. Fig. 10 is a view showing a state of a flexible holder when the rotation angle of the rotary table according to the embodiment is 180°.

The rotary table 520 has the rotary shaft 571. The rotary shaft 571 is inserted into the insertion hole 127 of the front plate 121 and the intermediate block 124 via the bearing 572. That is, the rotary shaft 571 is rotatably supported by the movable platen 120. The rotation center line 520X of the rotary table 520 is parallel to the mold opening and closing directions. A rotation direction of the rotary table 520 is a first direction D1 and a second direction D2 which is a direction opposite to the first direction D1. For example, the rotary table 520 further has a mold attachment portion 521 and a winding portion 522. The winding portion 522 includes a disk portion 523 to which the mold attachment portion 521 is fixed, and a cylindrical portion 524 which extends rearward from an outer peripheral portion of the disk portion 523.

The mold attachment portion 521 is for attaching the movable mold 820. The mold attachment portion 521 is formed in a plate shape perpendicular to the mold opening and closing directions. In most cases, since the movable mold 820 is formed in a rectangular shape when viewed in the mold opening and closing directions, the mold attachment portion 521 is also formed in a rectangular shape.

Moreover, the movable mold 820 is formed in a rectangular shape when viewed in the mold opening and closing directions is because, as shown in Fig. 3, in most cases, the first movable molding surface 821 parallel to a long side of the movable mold 820 and the second movable molding surface 822 are formed at intervals.

The mold attachment portion 521 is formed so as not to interfere with the four tie bars 140 during rotation. Specifically, the mold attachment portion 521 is disposed inside the inscribed circles of the four tie bars 140 in the mold opening and closing directions.

The flexible holder 500 is wound around the winding portion 522. When the rotary table 520 rotates in the first direction D1, the flexible holder 500 is wound around the winding portion 522. Further, when the rotary table 520 rotates in the second direction D2, the flexible holder 500 is unwound from the winding portion 522.

As shown in Fig. 7, the winding portion 522 is disposed on a side opposite to the movable mold 820 with reference to the mold attachment portion 521, for example, on the negative side in the X-axis direction of the mold attachment portion 521. The winding portion 522 includes the disk portion 523 to which the mold attachment portion 521 is fixed, and the cylindrical portion 524 which extends from the outer peripheral portion of the disk portion 523 to the negative side in the X-axis direction. A rear end surface of the disk portion 523 is in contact with a front end surface of the slide plate 610. Although details will be described later, the rear end surface of the disk portion 523 and the front end surface of the slide plate 610 slide with each other during the mold rotation process. Therefore, lubricating oil may be supplied between the rear end surface of the disk portion 523 and the front end surface of the slide plate 610.

The cylindrical portion 524 has a circumferential surface 525. The driven gear 535 is fixed to the circumferential surface 525 over the entire circumferential direction. The driven gear 535 is a portion of the transmission mechanism 532 which transmits the rotational driving force of the rotary motor 531 to the rotary table 520. In addition, the configuration of the transmission mechanism 532 may be a general transmission mechanism and is not limited to the configuration shown in Fig. 7.

The winding portion 522 has the circumferential surface 525. The circumferential surface 525 is disposed at a constant distance from the rotation center line 520X of the rotary table 520. The flexible holder 500 is wound around the circumferential surface 525. The flexible holder 500 is deformed along the circumferential surface 525. A curvature radius of the deformed portion can be kept constant regardless of the rotation angle of the rotary table 520. Therefore, a magnitude of stress generated by bending deformation can be kept constant regardless of the rotation angle of the rotary table 520.

One end portion 501 of the flexible holder 500 is fixed to the rotary table 520, and the other end portion 502 thereof is fixed to the movable platen 120. The one end portion 501 of the flexible holder 500 may be directly fixed to the rotary table 520, or may be fixed via a predetermined member. Similarly, the other end portion 502 of the flexible holder 500 may be fixed directly to the movable platen 120 or may be fixed via a predetermined member (for example, guide 550).

The flexible holder 500 deforms along the rotary table 520 and the guide 550 and holds a plurality of linear bodies 580. Therefore, it is possible to prevent the plurality of linear bodies 580 from rubbing against each other. As the flexible holder 500, for example, Cable Bear (registered trademark) or the like is used.

As shown in Fig. 3, the flexible holder 500 has a plurality of pin portions 511 disposed in parallel with each other and a plurality of annular portions 512 linearly connected by the plurality of pin portions 511. The flexible holder 500 holds the plurality of linear bodies 580 inside the plurality of annular portions 512. A plurality of adjacent annular portions 512 are connected to each other to be relatively rotatably about a pin portion 511. An axial direction of the pin portion 511 is the mold opening and closing directions (for example, the X-axis direction).

The annular portion 512 has a pair of link portions 513which is disposed at intervals in the mold opening and closing directions, and a pair of arm portions 514 which connects the pair of link portions 513. The pin portion 511 protrudes outward from the pair of link portions 513 and is inserted into a hole formed in another pair of link portions 513. As a result, the plurality of adjacent annular portions 512 are connected relatively rotatably around the pin portion 511 and relatively immovably connected in the mold opening and closing directions. The flexible holder 500 can be deformed in a plane perpendicular to the mold opening and closing directions.

Moreover, the flexible holder 500 may hold a plurality of linear bodies 580, and the configuration of the flexible holder 500 is not particularly limited. For example, the flexible holder 500 may be made of a resin tube.

For example, a portion of the linear body 580 is a flexible wire. The flexible wire may be a weak electric wire which transmits an electric signal or a strong electric wire which supplies electric power. For example, the weak electric wire transmits an electrical signal from a sensor which measures a temperature of the movable mold 820. For example, the strong electric wire supplies electric power to a heater embedded in the movable mold 820.

For example, a portion of the linear body 580 is a flexible pipe connected to the temperature control circuits 611 and 621. This flexible pipe delivers a temperature control medium which adjusts the temperatures of the slide plates 610 and 620. As described above, for example, water is used as the temperature control medium.

The temperature control medium passes through a flexible pipe for an outward route and is supplied to the temperature control circuits 611 and 621. After the temperature control medium exchanges heat with the movable platen 120 and the slide plate 610 and the slide plate 620, the temperature control medium is discharged from the temperature control circuits 611 and 621 and passes through a flexible pipe for a return route.

Moreover, a portion of the linear body 580 may be another flexible pipe. For example, this flexible pipe delivers a fluid. The fluid may be either a gas or a liquid. For example, the fluid is a temperature control medium which adjusts a temperature of the movable mold 820. As the temperature control medium, for example, water is used.

The temperature control medium passes through a flexible pipe for an outward route and is supplied to an inside of the movable mold 820. The temperature control medium exchanges heat with the movable mold 820 to maintain the temperature of the movable mold 820 at a predetermined temperature. After that, the temperature control medium is discharged to an outside of the movable mold 820 and passes through the flexible pipe for a return route.

The fluid delivered through the flexible pipe is not limited to the temperature control medium which adjusts the temperature of the movable mold 820. For example, the fluid delivered through the flexible pipe may be lubricating oil supplied to sliding parts.

Further, the fluid delivered by the flexible pipe may be a gas for mold release. The gas for mold release is injected from a surface of the movable mold 820 which comes into contact with the second molding product 22, the second unnecessary item 24, or the first unnecessary item 23. The second molding product 22, the second unnecessary item 24, or the first unnecessary item 23 can be released from the movable mold 820.

As shown in Figs. 9 and 10, one end portion of the linear body 580 is separably connected to a rotary connector 581, and the other end portion thereof is separably connected to the fixed connector 582. The rotary connector 581 is provided in the rotary table 520. Meanwhile, a fixed connector 582 is provided in the movable platen 120. By replacing the linear body 580 with respect to the rotary connector 581 or the fixed connector 582 when the mold unit 800 is replaced, a system compatible with the replaced mold unit 800 can be easily constructed.

The mold attachment portion 521 protrudes outward from the winding portion 522 when viewed in the mold opening and closing directions. The mold attachment portion 521 is disposed on the movable mold 820 side (for example, the positive side in the X-axis direction) with reference to the winding portion 522. The mold attachment portion 521 overlaps with a portion 504 of the flexible holder 500 when viewed in the mold opening and closing directions. The portion 504 of the flexible holder 500 is a portion wound around the winding portion 522 of the flexible holder 500.

As shown in Figs. 9 and 10, the guide 550 is fixed to the movable platen 120. The guide 550 guides the flexible holder 500. Therefore, it is possible to prevent the flexible holder 500 from being deformed in an unintended direction, and it is possible to suppress damages of the flexible holder 500. One end portion 501 of the flexible holder 500 is fixed to the rotary table 520, and the other end portion 502 thereof is fixed to the guide 550.

When the rotary table 520 rotates in the first direction D1 and the second direction D2, the flexible holder 500 is deformed along the guide 550. A shape of the flexible holder 500 can be controlled by the guide 550, and a movable range of the flexible holder 500 can be determined.

The guide 550 is formed so as not to interfere with the rotation of the rotary table 520. As shown in Fig. 7, for example, the guide 550 includes a guide groove 551 and a guide groove forming portion 560.

The flexible holder 500 is inserted into the guide groove 551. A groove width (dimension in the mold opening and closing directions) of the guide groove 551 is slightly larger than a width (dimension in the mold opening and closing directions) of the flexible holder 500.

The guide groove forming portion 560 forms the guide groove 551. The guide groove forming portion 560 includes a first side wall portion 561 and a second side wall portion 562 which are disposed at intervals in the mold opening and closing directions, and a bottom wall portion 563 which connect the first side wall portion 561 and the second side wall portion 562 to each other.

As shown in Figs. 9 and 10, for example, the bottom wall portion 563 has an arc-shaped columnar surface 564 when viewed in the mold opening and closing directions. The flexible holder 500 is deformed along the columnar surface 564. A curvature radius of the deformed portion can be kept constant regardless of the rotation angle of the rotary table 520. Therefore, a magnitude of stress generated by bending deformation can be kept constant regardless of the rotation angle of the rotary table 520.

As described above, the bottom wall portion 563 has the arc-shaped columnar surface 564 when viewed in the mold opening and closing directions. The columnar surface 564 is disposed at a constant distance from the rotation center line 520X of the rotary table 520, and is disposed at a constant distance from the circumferential surface 525 of the winding portion 522 of the rotary table 520. A curvature radius of the curved portion (curved portion between the winding portion 522 and the guide 550) of the flexible holder 500 can be kept constant regardless of the rotation angle of the rotary table 520. Therefore, a magnitude of stress generated by bending deformation can be kept constant regardless of the rotation angle of the rotary table 520.

As shown in Fig. 7, the bottom wall portion 563 includes a discharge hole 565 through which a liquid collected inside the guide groove forming portion 560 is discharged. For example, the discharge hole 565 is a round hole. Moreover, the discharge hole 565 may be a slit hole, and a hole shape of the discharge hole 565 is not particularly limited.

For example, a liquid such as the temperature control medium or lubricating oil leaked when the mold unit 800 is replaced is discharged through the discharge hole 565 from an inside of the guide groove forming portion 560. The reason why the liquid leaks when the mold unit 800 is replaced is because the linear body 580 is replaced with respect to the rotary connector 581 or the fixed connector 582. The discharge hole 565 is formed, and thus, the liquid is not collected inside the guide groove forming portion 560. Accordingly, it is possible to prevent the flexible holder 500 or the linear body 580 from being deteriorated by the liquid.

The discharge hole 565 is formed in the bottom wall portion 563 of the guide groove forming portion 560 disposed below the rotary table 520. The bottom wall portion 563 has the arc-shaped columnar surface 564 which is convex downward when viewed in the mold opening and closing directions. The discharge hole 565 is formed in a lower end portion of the columnar surface 564. The liquid can be collected in the discharge hole 565 by the gravity.

Although described in detail later, the guide groove forming portion 560 may be disposed above the rotary table 520, and the discharge hole 565 is not formed in the bottom wall portion 563 thereof. It is possible to prevent dust or the like from entering the inside of the guide groove forming portion 560 from above.

The first side wall portion 561 and the second side wall portion 562 are disposed at intervals in the mold opening and closing directions. The interval therebetween is a groove width of the guide groove 551. The first side wall portion 561 is closer to the movable mold 820 than the second side wall portion 562. Each of the first side wall portion 561 and the second side wall portion 562 is formed in a plate shape perpendicular to the mold opening and closing directions.

As shown in Figs. 9 and 10, the first side wall portion 561 has an arc-shaped outer edge 566 when viewed in the mold opening and closing directions and an arc-shaped inner edge 567 when viewed in the mold opening and closing directions. The inner edge 567 is disposed closer to the rotation center line 520X of the rotary table 520 than the outer edge 566. The outer edge 566 and the inner edge 567 are formed on concentric circles about the rotation center line 520X of the rotary table 520 when viewed in the mold opening and closing directions.

### (First Injection Unit and Second Injection Unit)

Unlike the descriptions of the mold clamping unit 100, in descriptions of the first injection unit 301 and the second injection unit 302, a movement direction (for example, X-axis negative direction) of a screw 330 during filling is referred to as a front side, and a movement direction (for example, X-axis positive direction) of the screw 330 during plasticizing is referred to as a rear side.

The first injection unit 301 is installed on a first slide base 303, and the first slide base 303 is disposed so as to be movable forward or rearward with respect to the injection unit frame 920. The first injection unit 301 is disposed to be movable forward or rearward with respect to the mold unit 800. The first injection unit 301 touches the mold unit 800 (more specifically, the stationary mold 810), and the thus, first cavity space 801 in the mold unit 800 is filled with the molding material.

The second injection unit 302 is installed on a second slide base, and the second slide base is disposed so as to be movable forward or rearward with respect to the injection unit frame 920. The second injection unit 302 is disposed to be movable forward or rearward with respect to the mold unit 800. The second injection unit 302 touches the mold unit 800 (more specifically, the stationary mold 810), and thus, the second cavity space 802 in the mold unit 800 is filled with the molding material.

The first injection unit 301 and the second injection unit 302 are disposed at intervals in the Y-axis direction. This is because the first cavity space 801 and the second cavity space 802 are disposed at intervals in the Y-axis direction. The molding material with which the first cavity space 801 is filled by the first injection unit 301 and the molding material with which the second cavity space 802 is filled by the second injection unit 302 may be different materials or may be the same material.

The first injection unit 301 and the second injection unit 302 are configured in the same manner. Therefore, hereinafter, a configuration of the first injection unit 301 will be described, and descriptions of a configuration of the second injection unit 302 will be omitted. For example, as shown in Figs. 1 and 2, the first injection unit 301 includes a cylinder 310, a nozzle 320, the screw 330, a plasticizing motor 340, an injection motor 350, a pressure detector 360, or the like. The cylinder 310 heats the molding material which is supplied to an inner portion of the cylinder 310. The nozzle 320 is provided on a front end portion of the cylinder 310 and is pressed against the mold unit 800. The screw 330 is disposed in the cylinder 310 so as to be rotatable and movable forward or rearward. The plasticizing motor 340 rotates the screw 330. The injection motor 350 moves the screw 330 forward or rearward. The pressure detector 360 detects a pressure transmitted between the injection motor 350 and the screw 330.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed in a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X-axis direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on a front end portion of the cylinder 310 and is pressed against the mold unit 800. The heating unit 313 and the temperature measurer 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, when the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the first injection unit 301 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a pressure transmitted between the injection motor 350 and the screw 330. The pressure detector 360 is provided in a pressure transmission path between the injection motor 350 and the screw 330 and detects a pressure applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The first injection unit 301 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front portion of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are disposed in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the first cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. When the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are disposed in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a set pressure or less, the screw 330 moves forward at the set movement speed. Meanwhile, in a case where the detection value of the pressure detector 360 exceeds the set pressure, in order to protect the mold, the screw 330 moves forward at a movement speed slower than the set movement speed such that the detection value of the pressure detector 360 is the set pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the first cavity space 801 in the mold unit 800 is gradually cooled, and when the holding pressure process is completed, an inlet of the first cavity space 801 is closed by the molding material which is solidified. This state is referred to as a gate seal, and a backflow of the molding material from the first cavity space 801 is prevented. After the holding pressure process, a cooling process starts. In the cooling process, solidification of the molding material in the first cavity space 801 is performed. In order to shorten a molding cycle time, the plasticizing process may be performed during the cooling process.

In addition, the first injection unit 301 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the first injection unit 301 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type first injection unit 301may be a vertical type mold clamping unit or a horizontal type mold injection unit. Similarly, the mold clamping unit combined with the horizontal type first injection unit 301 may be a horizontal type mold clamping unit or a vertical type mold clamping unit.

### (First Moving Unit and Second Moving Unit)

Similarly to the descriptions of the first injection unit 301 and the second injection unit 302, in descriptions of the first moving unit 401 and the second moving unit (not shown), the movement direction (for example, X-axis negative direction) of the screw 330 during filling is referred to as a front side, and the movement direction (X-axis positive direction) of the screw 330 during plasticizing is referred to as a rear side.

The first moving unit 401 moves the first injection unit 301 rearward with respect to the mold unit 800. In addition, the first moving unit 401 presses the nozzle 320 of the first injection unit 301 to the mold unit 800 to generate a nozzle touch pressure.

The second moving unit 402 moves the second injection unit 302 forward or rearward with respect to the mold unit 800. In addition, the second moving unit 400 presses the nozzle 320 of the second injection unit 302 to the mold unit 800 to generate a nozzle touch pressure.

The first moving unit 401 and the second moving unit are disposed at intervals in the Y-axis direction. The first moving unit 401 and the second moving unit independently move the first injection unit 301 and the second injection unit 302 forward or rearward.

The first moving unit 401 and the second moving unit are configured in the same manner. Therefore, a configuration of the first moving unit 401 will be described below, and descriptions of a configuration of the second moving unit will be omitted. As shown in Figs. 1 and 2, the first moving unit 401 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servomotor.

The hydraulic cylinder 430 includes a cylinder body 431, a piston 432, and a piston rod 433. The cylinder body 431 is fixed to the first injection unit 301. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 413. The working liquid discharged from the first port 411 is supplied to the front chamber 435 via the first flow path 413, and thus, the first injection unit 301 is pushed forward. The first injection unit 301 moves forward, and thus, the nozzle 320 of the first injection unit 301 is pressed against the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 414. The working liquid discharged from the second port 412 is supplied to the rear chamber 436 of the hydraulic cylinder 430 via the second flow path 414, and thus, the first injection unit 301 is pushed rearward. The first injection unit 301 moves rearward and thus, the nozzle 320 of the first injection unit 301 is separated from the stationary mold 810.

In addition, in the present embodiment, the first moving unit 401 includes the hydraulic cylinder 430. However, the present invention is not limited to this. For example, instead of the hydraulic cylinder 430, an electric motor and a motion conversion mechanism which converts a rotary motion of the electric motor into a linear motion of the first injection unit 301 may be used.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, the cooling process, the depressurization process, the mold opening process, the ejection process, the mold rotation process, or the like to repeatedly manufacture the first molding product 21 and the second molding product 22. A series of operations to obtain the first molding product 21 and the second molding product 22, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the mold clamping process, the filling process, the holding pressure process, the cooling process, the depressurization process, the mold opening process, the ejection process, and the mold rotation process in this order. Here, this order is an order of the start of each process. The filling process, the holding pressure process, and the cooling process are performed during the mold clamping process. The start of the mold clamping process may coincide with the start of the filling process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the molding closing process. Moreover, the ejection process may be performed the mold opening process. In a case where an on/off valve which opens or closes the flow path of the nozzle 320 is provided, the mold opening process may be performed during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, the ejection process, and the mold rotation process.

During one molding cycle, the temperature control medium flows through the temperature control circuit 611, and the controller 700 estimates the temperature of the slide plate 610 from the signal sent from the temperature sensor 612 and monitors whether or not this temperature is within a predetermined temperature range. For example, the predetermined temperature range is a temperature range in which the lubricating oil supplied between the front end surface of the slide plate 610 and the rear end surface of the disk portion 523 exhibits desired lubricating performance. Then, when the estimated temperature of the slide plate 610 is lower than the predetermined temperature range, the controller 700 temporarily stops a flow of the temperature control medium or decreases a flow speed, and when the estimated temperature is higher than the predetermined temperature range, the controller 700 temporarily stops the molding cycle or increases the flow speed of the temperature control medium.

Further, during one molding cycle, the temperature control medium flows through the temperature control circuit 621, and the controller 700 estimates the temperature of the slide plate 620 from the signal sent from the temperature sensor 622 and monitors whether or not this temperature is within a predetermined temperature range. For example, the predetermined temperature range is a temperature range in which the lubricating oil supplied between the front end surface of the slide plate 620 and the rear end surface of the driven gear 535 exhibits desired lubricating performance. Then, when the estimated temperature of the slide plate 620 is lower than the predetermined temperature range, the controller 700 temporarily stops a flow of the temperature control medium or decreases a flow speed, and when the estimated temperature is higher than the predetermined temperature range, the controller 700 temporarily stops the molding cycle or increases the flow speed of the temperature control medium.

In the mold rotation process, the front end surface of the slide plate 610 and the rear end surface of the disk portion 523 slide with each other as the rotary table 520 rotates. Therefore, heat is generated due to friction between the slide plate 610 and the disk portion 523. In the first embodiment, even if the frictional heat is generated, as described above, the controller 700 controls the flow of the temperature control medium flowing through the temperature control circuit 611, and the temperature of the slide plate 610 is kept within the predetermined temperature range.

Similarly, as the rotary table 520 rotates, the rear end surface of the slide plate 620 and the front end surface of the driven gear 535 slide with each other, and heat due to friction is also generated between the slide plate 620 and the driven gear 535. In the first embodiment, even if the frictional heat is generated, as described above, the controller 700 controls the flow of the temperature control medium flowing through the temperature control circuit 621, and the temperature of the slide plate 620 is kept within the predetermined temperature range.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and leakage of the molding material from the nozzle 320 before the filling process starts can be prevented.

The controller 700 is connected to an operation unit 750 which receives input operations by a user and a display unit 760 which displays a display screen. For example, the operation unit 750 and the display unit 760 may include a touch panel to be integrated with each other. The touch panel as the display unit 760 displays the display screen under the control of the controller 700. For example, information such as setting of the injection molding machine 10 and a current state of the injection molding machine 10 may be displayed on the display screen of the touch panel. Further, for example, an input operation unit such as a button which receives an input operation by the user or an input field may be displayed on the display screen of the touch panel. The touch panel as the operation unit 750 detects the input operation on the display screen by the user and outputs a signal corresponding to the input operation to the controller 700. As a result, for example, the user operates the input operation unit provided on the display screen while checking the information displayed on the display screen, and thus, can set the injection molding machine 10 (including inputting the set value) or the like. Further, the user operates the input operation unit provided on the display screen, and thus, can operate the injection molding machine 10 corresponding to the input operation unit. For example, the operation of the injection molding machine 10 may include an operation (including stopping) of the mold clamping unit 100, the first ejector unit 201, the second ejector unit 202, the first injection unit 301, the second injection unit 302, the first moving unit 401, and the second moving unit (not shown), or the like, switching of the display screen displayed on the touch panel as the display unit 760, or the like.

In addition, although the operation unit 750 and the display unit 760 of the present embodiment are described as being integrated as a touch panel, the operation unit 750 and the display unit 760 may be provided independently. In addition, a plurality of the operation units 750 may be provided. The operation unit 750 and the display unit 760 are disposed on an operation side (Y-axis negative direction) of the mold clamping unit 100 (more specifically, the stationary platen 110).

According to the first embodiment, the frictional heat is generated between the slide plate 610 and the disk portion 523 and between the slide plate 620 and the driven gear 535 during the mold rotation process, but the temperatures of the slide plates 610 and 620 can be maintained in a predetermined temperature range. Therefore, lubricating performance of the lubricating oil can be maintained for a long period of time. In addition, stable slidability can be obtained, and wear of the slide plates 610 and 620 can be suppressed. Further, thermal expansion of the movable platen 120 and the rotary table 520 can be suppressed. In this respect as well, stable slidability can be obtained, and wear of the slide plates 610 and 620 can be suppressed.

In the first embodiment, the rotary table 520 is an example of the first member, the movable platen 120 is an example of the second member, the slide plates 610 and 620 are examples of sacrificial members, and the temperature control circuits 611 and 621 are examples of temperature adjustment mechanisms.

If a thickness of the slide plate 610 or 620 is less than a predetermined thickness due to wear, the slide plate 610 or 620 may be replaced.

In the first embodiment, the rear end surface of the cylindrical portion 524 of the rotary table 520 is separated from the front end surface of the movable platen 120, but the slide plate 620 may be provided between the rear end surface of the cylindrical portion 524 and the front end surface of the movable platen 120. However, from the viewpoint of preventing the rotary table 520 from falling over, preferably, the slide plate 620 is provided between the driven gear 535 and the gear restraint block 125.

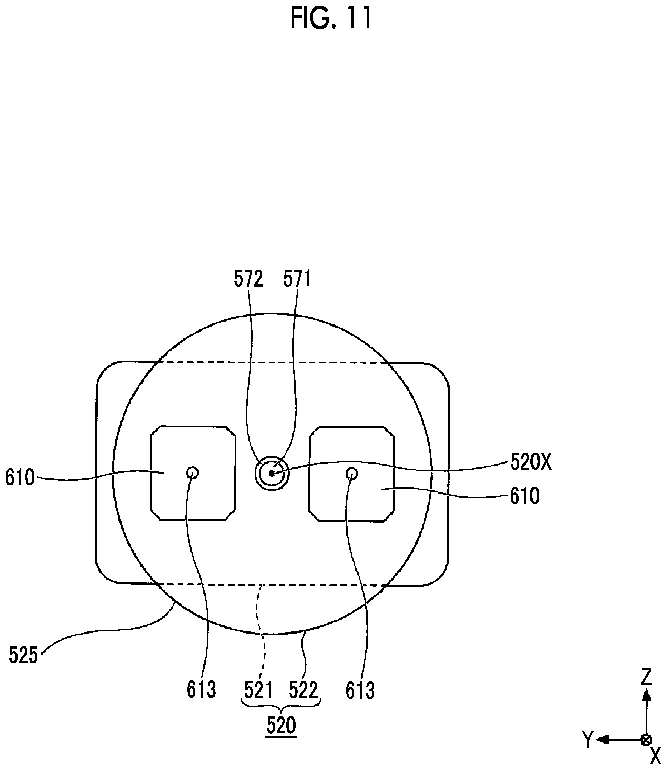

Next, a first modification example of the first embodiment will be described. The first modification example of the first embodiment is different from the first embodiment mainly in that the slide plate is fixed to the rotary table. Fig. 11 is a view showing the slide plate 610 fixed to the rotary table according to the first modification example of the first embodiment.

In the first modification example of the first embodiment, as shown in Fig. 11, the slide plate 610 is detachably fixed to the rear end surface of the disk portion 523 of the rotary table 520, not to the front end surface of the front plate 121 of the movable platen 120. For example, the slide plate 610 is detachably fixed to the rear end surface of the disk portion 523 by using a bolt 613. A plurality (for example, two) of the slide plates 610 may be used. A material of the slide plate 610 is a material softer than that of the front plate 121 of the movable platen 120, for example, a copper alloy such as copper or brass. As in the first embodiment, the temperature control circuit 611 and the temperature sensor 612 are provided in the front plate 121 and the rear block 126 (refer to Fig. 7).

In the mold rotation process of the first modification example of the first embodiment, the rear end surface of the slide plate 610 and the front end surface of the front plate 121 slide with each other as the rotary table 520 rotates. Therefore, heat is generated due to friction between the slide plate 610 and the front plate 121. In the first modification example of the first embodiment, even if the frictional heat is generated, the controller 700 controls the flow of the temperature control medium flowing through the temperature control circuit 611, and the temperature of the slide plate 610 is kept within the predetermined temperature range.

According to the first modification example of the first embodiment, frictional heat is generated between the slide plate 610 and the front plate 121 during the mold rotation process, but the temperature of the slide plate 610 is maintained within a predetermined temperature range. Therefore, lubricating performance of the lubricating oil can be maintained for a long period of time. In addition, stable slidability can be obtained, and wear of the slide plate 610 can be suppressed. Further, thermal expansion of the movable platen 120 and the rotary table 520 can be suppressed. In this respect as well, stable slidability can be obtained, and wear of the slide plate 610 can be suppressed.

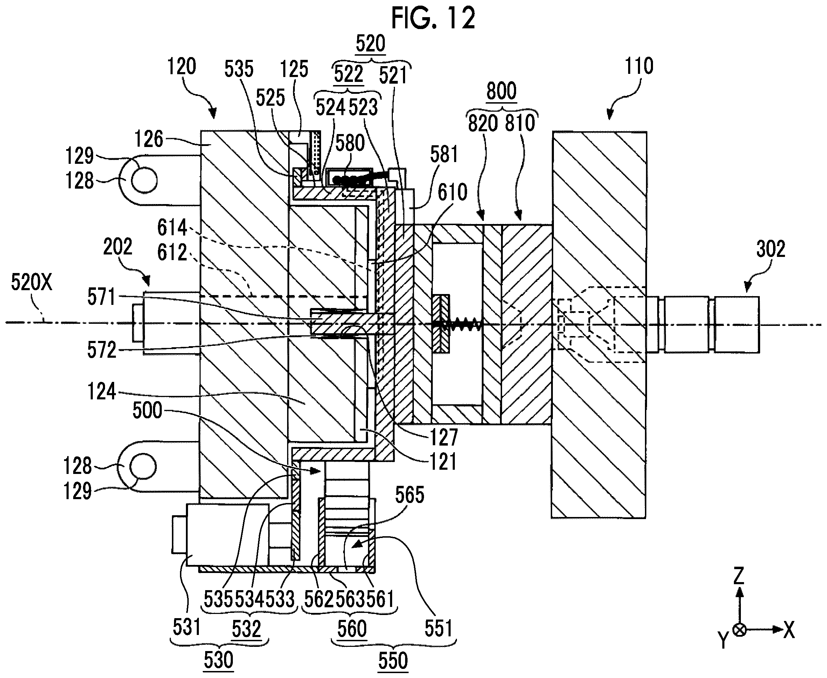

Next, a second modification example of the first embodiment will be described. The second modification example of the first embodiment is mainly different from the first modification example of the first embodiment in the configuration of the temperature control circuit. Fig. 12 is a vertical cross-sectional view showing a temperature control circuit according to a second modification example of the first embodiment, and is a vertical cross-sectional view taken along the rotation center line of the rotary table.

As in the first modification example of the first embodiment, in the second modification example of the first embodiment, the slide plate 610 is detachably fixed to the rear end surface of the disk portion 523 of the rotary table 520 (refer to Fig. 11). Further, as shown in Fig. 12, the temperature control circuit 611 is not formed in the front plate 121 and the rear block 126, and the temperature control circuit 614 is formed in the disk portion 523 and the cylindrical portion 524 of the rotary table 520. Like the temperature control circuit 611, for example, the temperature control circuit 614 has one end portion and the other end portion near the lower end of the slide plate 610 when viewed in the mold opening and closing directions. Then, the temperature control circuit 614 extends upward from one end portion and the other end portion, and a portion extending upward from one end portion and a portion extending upward from the other end portion are connected to each other near the upper end of the slide plate 610. The temperature control circuit 614 may have one end portion near the lower end of the slide plate 610 and the other end portion near the upper end of the slide plate 610 and meander between them. The temperature control circuit 614 may be provided near the central portion of the slide plate 610 when viewed in the mold opening and closing directions. The temperature control circuit 614 may be connected to a portion of the linear body 580. Other configurations are the same as those of the first modification example of the first embodiment.

The same effects as those of the first modification example can be obtained by the second modification example of the first embodiment.

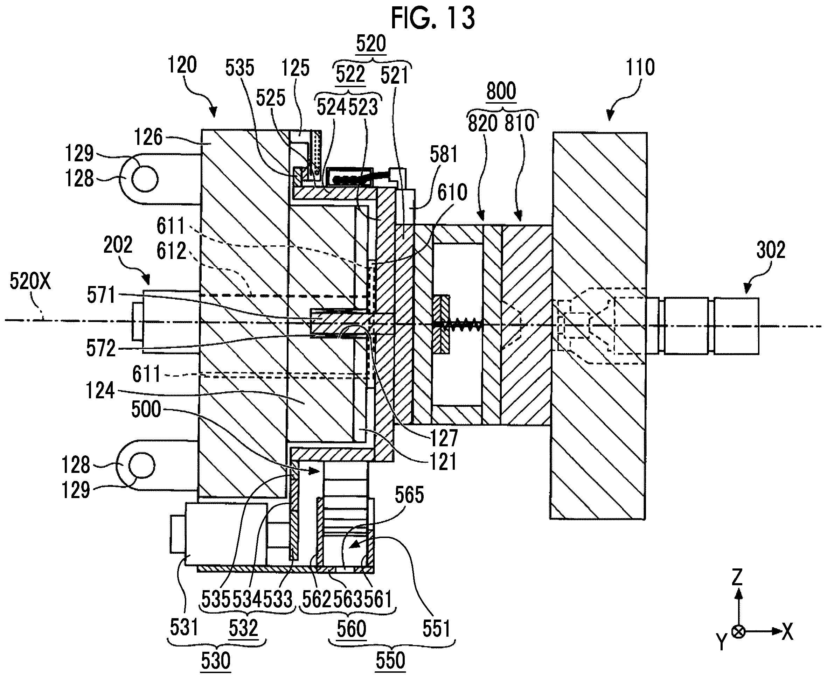

Next, a second embodiment will be described. The second embodiment is different from the first embodiment mainly in the configuration of the temperature control circuit. Fig. 13 is a vertical cross-sectional view showing a temperature control circuit according to the second embodiment, and is a vertical cross-sectional view taken along the rotation center line of the rotary table.

In the second embodiment, as shown in Fig. 13, the temperature control circuit 611 is formed so as to extend not only to the front plate 121 and the rear block 126 but also to the inside of the slide plate 610. Preferably, a sealing member such as an O-ring surrounding the temperature control circuit 611 is provided between the front plate 121 and the slide plate 610. Other configurations are the same as those of the first embodiment.

According to the second embodiment, the temperature of the slide plate 610 can be directly controlled. Therefore, more excellent temperature control efficiency can be obtained.

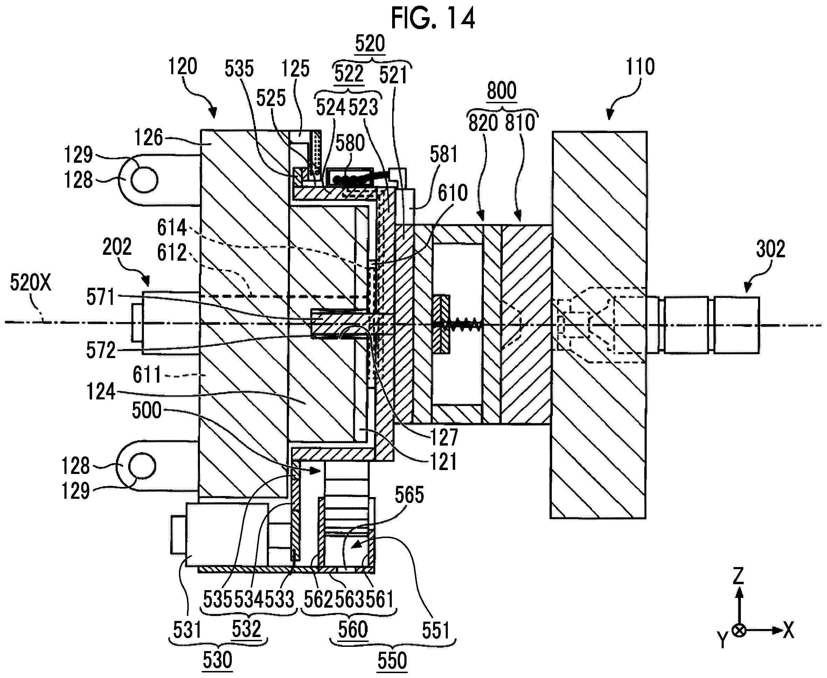

Next, a modification example of the second embodiment will be described. The modification example of the second embodiment is different from the second embodiment mainly in that the slide plate is fixed to the rotary table. Fig. 14 is a vertical cross-sectional view showing a temperature control circuit according to the modification example of the second embodiment, and is a vertical cross-sectional view taken along the rotation center line of the rotary table.

As in the first modification example of the first embodiment, in the modification example of the second embodiment, the slide plate 610 is detachably fixed to the rear end surface of the disk portion 523 of the rotary table 520 (refer to Fig. 11). Further, as shown in Fig. 14, the temperature control circuit 611 is not formed in the front plate 121 and the rear block 126, and the temperature control circuit 614 is formed in the disk portion 523 and the cylindrical portion 524 of the rotary table 520. The temperature control circuit 614 is formed so as to extend not only to the winding portion 522 but also to the inside of the slide plate 610. Preferably, a sealing member such as an O-ring surrounding the temperature control circuit 614 is provided between the disk portion 523 and the slide plate 610. Other configurations are the same as those of the second embodiment.

The same effects as those of the second modification example can be obtained by the modification example of the second embodiment.

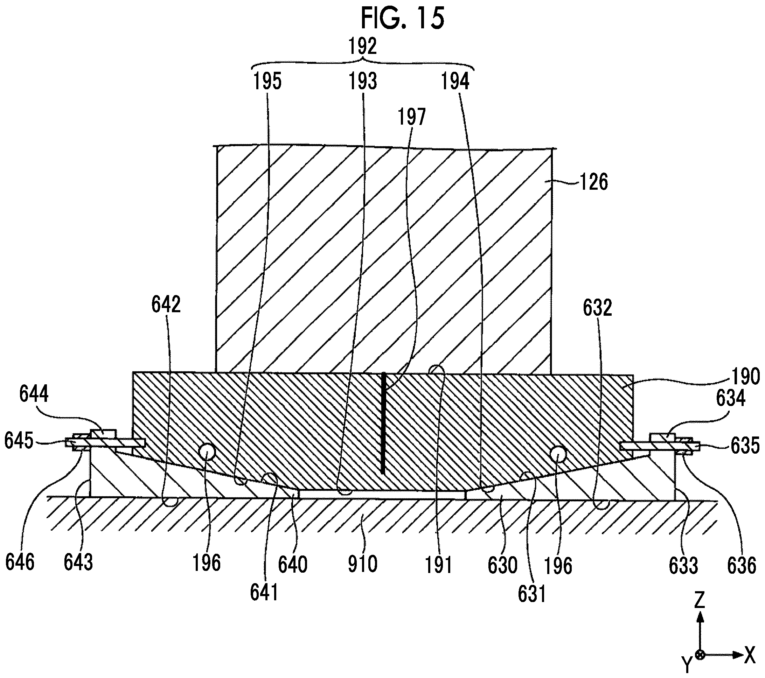

Next, a third embodiment will be described. The third embodiment relates to a slide block of a platen carriage which supports the movable platen. Fig. 15 is a vertical cross-sectional view showing the slide block of the platen carriage according to the third embodiment.

In the third embodiment, as shown in Fig. 15, the rear block 126 of the movable platen 120 is supported by the platen carriage 190 on the mold clamping unit frame 910. The platen carriage 190 has a horizontally parallel upper surface 191 which supports the rear block 126 and a lower surface 192 which faces the mold clamping unit frame 910. The lower surface 192 is provided in a center in the X-axis direction and includes a central portion 193 which is parallel to the horizontal direction, a front inclined portion 194 which is provided in the X-axis positive direction from the central portion 193, and a rear inclined portion 195 which is provided in the X-axis negative direction from the central portion 193. The front inclined portion 194 is an inclined surface which is separated from the mold clamping unit frame 910 as a distance from the central portion 193 increases. The rear inclined portion 195 is an inclined surface which is separated from the mold clamping unit frame 910 as a distance from the central portion 193 increases. For example, the central portion 193, the front inclined portion 194, and the rear inclined portion 195 are all flat surfaces.

A wedge-shaped slide block 630 is provided between the front inclined portion 194 and the mold clamping unit frame 910. The slide block 630 has an inclined surface 631 which is in contact with the front inclined portion 194, a lower surface 632 which is in contact with the mold clamping unit frame 910, and a vertical surface 633 which connects the inclined surface 631 and the lower surface 632 to each other. A shape of a cross section of the slide block 630 perpendicular to the Z-axis direction is a substantially right triangle. The slide block 630 has a protrusion 634 which rises upward from a portion where the inclined surface 631 and the vertical surface 633 intersect each other. A bolt 635 which penetrates the protrusion 634 in the X-axis direction is provided, and one end of the bolt 635 is fixed to the front end surface of the platen carriage 190. An adjustment nut 636 is attached to the other end of the bolt 635. By tightening the adjustment nut 636, the slide block 630 can be fixed to the platen carriage 190 in a state where the inclined surface 631 is in contact with the front inclined portion 194 and the lower surface 632 is in contact with the mold clamping unit frame 910.

During the mold opening process and the mold closing process, the lower surface 632 of the slide block 630 and the upper surface of the mold clamping unit frame 910 slide with each other. Therefore, lubricating oil may be supplied between the lower surface 632 of the slide block 630 and the upper surface of the mold clamping unit frame 910.

A wedge-shaped slide block 640 is provided between the rear inclined portion 195 and the mold clamping unit frame 910. The slide block 640 has an inclined surface 641 which is in contact with the rear inclined portion 195, a lower surface 642 which is in contact with the mold clamping unit frame 910, and a vertical surface 643 which connects the inclined surface 641 and the lower surface 642 to each other. A shape of a cross section of the slide block 640 perpendicular to the Z-axis direction is a substantially right triangle. The slide block 640 has a protrusion 644 which rises upward from a portion where the inclined surface 641 and the vertical surface 643 intersect each other. A bolt 645 which penetrates the protrusion 644 in the X-axis direction is provided, and one end of the bolt 645 is fixed to the rear end surface of the platen carriage 190. An adjustment nut 646 is attached to the other end of the bolt 645. By tightening the adjustment nut 646, the slide block 640 can be fixed to the platen carriage 190 in a state where the inclined surface 641 is in contact with the rear inclined portion 195 and the lower surface 642 is in contact with the mold clamping unit frame 910.

During the mold opening process and the mold closing process, the lower surface 642 of the slide block 640 and the upper surface of the mold clamping unit frame 910 slide with each other. Therefore, lubricating oil may be supplied between the lower surface 642 of the slide block 640 and the upper surface of the mold clamping unit frame 910.

A temperature control circuit 196 through which a temperature control medium for adjusting the temperature of the slide blocks 630 and 640 flows is formed in the platen carriage 190. As the temperature control medium, for example, water is used. The temperature control medium is supplied into the temperature control circuit 196 from a feed port of the temperature control circuit 196, exchanges heat with the platen carriage 190, the slide block 630, and the slide block 640, and is discharged from a discharge port of the temperature control circuit 196. Further, a temperature sensor 197 is provided in the platen carriage 190. The temperature sensor 197 sends a signal indicating a detection result to the controller 700. The controller 700 can estimate the temperatures of the slide blocks 630 and 640 from the signal sent from the temperature sensor 197.

In the mold opening process and the mold closing process, as the movable platen 120 moves, the lower surface 632 of the slide block 630 and the upper surface of the mold clamping unit frame 910 slide with each other, and the lower surface 642 of the slide block 640 and the upper surface of the mold clamping unit frame 910 slide with each other. Therefore, heat due to friction between the slide block 630 and the mold clamping unit frame 910 and heat due to friction between the slide block 640 and the mold clamping unit frame 910 are generated. During that time, the temperature control medium flows through the temperature control circuit 196, and the temperature sensor 197 sends the signal indicating the detection result to the controller 700. The controller 700 estimates the temperatures of the slide blocks 630 and 640 from the signal sent from the temperature sensor 197, and monitors whether or not the temperatures are within a predetermined temperature range. For example, the predetermined temperature range is a temperature range in which the lubricating oil supplied between the lower surface 632 of the slide block 630 and the lower surface 642 of the slide block 640, and the upper surface of the mold clamping unit frame 910 exhibits desired lubricating performance. Then, when the estimated temperature of the slide block 630 or 640 is lower than the predetermined temperature range, the controller 700 temporarily stops the flow of the temperature control medium or decreases the flow speed, and when the estimated temperature of the slide block 630 or 640 is higher than the predetermined temperature range, the controller 700 temporarily stops the molding cycle or increases the flow speed of the temperature control medium.

According to the third embodiment, the frictional heat is generated between the slide blocks 630 and 640 and the mold clamping unit frame 910 during the mold opening process and the mold closing process, but the temperatures of the slide blocks 630 and 640 can be maintained at the predetermined temperature range. Therefore, lubricating performance of the lubricating oil can be maintained for a long period of time. In addition, stable slidability can be obtained, and wear of the slide blocks 630 and 640 can be suppressed. Further, thermal expansion of the platen carriage 190 and the mold clamping unit frame 910 can be suppressed. In this respect as well, stable slidability can be obtained, and wear of the slide blocks 630 and 640 can be suppressed.

In the third embodiment, the mold clamping unit frame 910 is an example of the first member, the platen carriage 190 is an example of the second member, the slide blocks 630 and 640 are examples of sacrificial member, and the temperature control circuit 196 is an example of a temperature adjustment mechanism.

Even if the thickness of the slide block 630 or 640 is reduced due to wear, the distance between the lower surface 192 of the platen carriage 190 and the mold clamping unit frame 910 can be maintained by tightening the adjustment nut 636 or 646. Further, when the thickness of the slide block 630 or 640 is less than a predetermined thickness due to wear, the slide block 630 or 640 may be replaced.

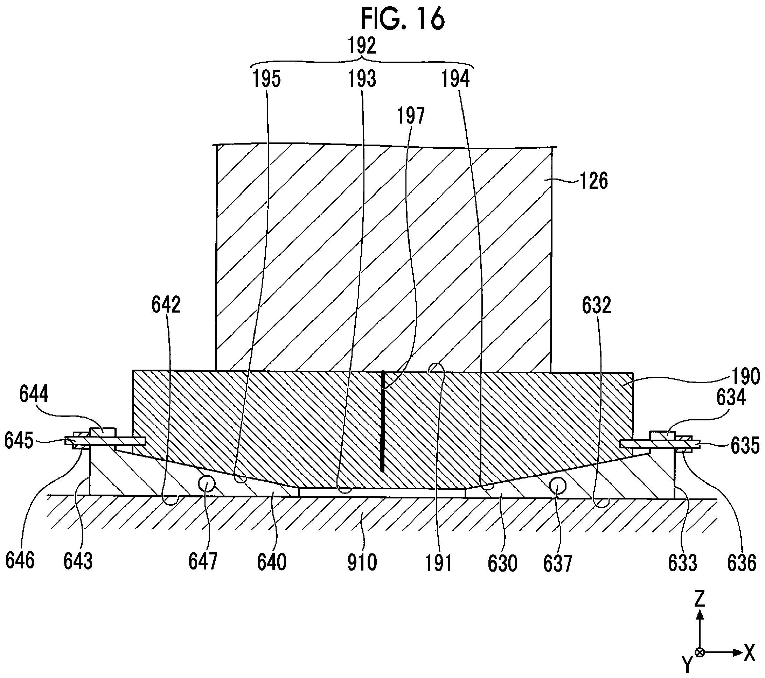

Next, a fourth embodiment will be described. The fourth embodiment is different from the third embodiment mainly in the configuration of the temperature control circuit. Fig. 16 is a vertical cross-sectional view showing a slide block of a platen carriage according to the fourth embodiment.

In the fourth embodiment, as shown in Fig. 16, a temperature control circuit 637 through which the temperature control medium for adjusting the temperature of the slide block 630 flows is formed in the slide block 630. As the temperature control medium, for example, water is used. The temperature control medium is supplied into the temperature control circuit 637 from a feed port of the temperature control circuit 637, exchanges heat with the slide block 630, and is discharged from a discharge port of the temperature control circuit 637. Further, a temperature control circuit 647 through which a temperature control medium for adjusting the temperature of the slide block 640 flows is formed in the slide block 640. As the temperature control medium, for example, water is used. The temperature control medium is supplied into the temperature control circuit 647 from a feed port of the temperature control circuit 647, exchanges heat with the slide block 640, and is discharged from a discharge port of the temperature control circuit 647. Meanwhile, the temperature control circuit 196 is not formed in the platen carriage 190. Other configurations are the same as those of the third embodiment.

According to the fourth embodiment, the temperatures of the slide blocks 630 and 640 can be adjusted with higher accuracy.

In the fourth embodiment, the temperature control circuits 637 and 647 are examples of the temperature adjustment mechanism.

In the third embodiment and the fourth embodiment, the injection molding machine 10 may include one injection unit, and in the injection molding machine, the rotary table may not be provided, and the movable mold may be attached to the movable platen.

The third embodiment and the fourth embodiment may be combined with each other. That is, as in the third embodiment, the temperature control circuit 196 is formed in the platen carriage 190, and as in the fourth embodiment, the temperature control circuits 637 and 647 may be formed in the slide blocks 630 and 640, respectively.

### (Modification Example or the like)

Although the embodiments of the injection molding machine are described above, the present invention is defined by the appended claims.

For example, the guide groove forming portion 560 of the above embodiment is disposed below the rotary table 520, but may be disposed above the rotary table 520. For example, the disposition is a disposition in which the flexible holder 500, the rotary table 520 and the guide 550 shown in Figs. 9 and 10 are rotated by 180° around the rotation center line 520X of the rotary table 520.

Further, although one flexible holder 500 is wound around the rotary table 520 of the above embodiment, a plurality of the flexible holders 500 may be unwound. For example, the two flexible holders 500 may be disposed point-symmetrically about the rotation center line 520X of the rotary table 520 when viewed in the mold opening and closing directions. In this case, the two flexible holders 500 are supported by different guides 550, one guide 550 is placed below the rotary table 520 and the other guide 550 is placed above the rotary table 520.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. When the mold clamping unit 100 is the vertical type mold clamping unit, a lower mold is attached to the rotary table 520, and the rotary table 520 is rotatably attached to the lower platen. The rotation center line 520X of the rotary table 520 is parallel to the vertical direction. The guide 550 is fixed to the lower platen. The upper mold is attached to the upper platen disposed above the lower platen. The upper mold is a movable mold, and the lower mold is a stationary mold.

### Brief Description of the Reference Symbols

- 10:: injection molding machine
- 100:: mold clamping unit
- 110:: stationary platen
- 120:: movable platen
- 196:: temperature control circuit
- 197:: temperature sensor
- 520:: rotary table
- 520X:: rotation center line
- 610:: slide plate
- 611:: temperature control circuit
- 612:: temperature sensor
- 620:: slide plate
- 621:: temperature control circuit
- 622:: temperature sensor
- 630:: slide block
- 637:: temperature control circuit
- 640:: slide block
- 647:: temperature control circuit
- 800:: mold unit
- 801:: first cavity space
- 802:: second cavity space
- 810:: stationary mold
- 820:: movable mold

## Claims

1. An injection molding machine (10) comprising:
a first member (520, 910) which has a first surface;
a second member (120, 190) which has a second surface facing the first surface; the injection molding machine being **characterized in that** it further comprises:
a sacrificial member (610, 620, 630, 640) which has a third surface fixed to one surface of the first surface or the second surface and sliding with the other surface of the first surface or the second surface; and
a temperature adjustment mechanism (196, 611, 621, 637, 647) which adjusts a temperature of the sacrificial member (610, 620, 630, 640).

2. The injection molding machine (10) according to claim 1,
wherein the sacrificial member (610, 620, 630, 640) is detachably fixed to one of the first surface and the second surface.

3. The injection molding machine (10) according to claim 1 or 2,
wherein the sacrificial member (610, 620, 630, 640) is made of a material softer than that of the other member having the facing first surface or second surface.

4. The injection molding machine (10) according to any one of claims 1 to 3,
wherein the temperature adjustment mechanism (196, 611, 621, 637, 647) has a first temperature control circuit which is provided in one of the first member and the second member to which the sacrificial member (610, 620, 630, 640) is fixed.

5. The injection molding machine (10) according to any one of claims 1 to 4,
wherein the temperature adjustment mechanism (196, 611, 621, 637, 647) has a second temperature control circuit which is provided in the other of the first member and the second member to which the sacrificial member (610, 620, 630, 640) is fixed.

6. The injection molding machine (10) according to any one of claims 1 to 5,
wherein the temperature adjustment mechanism (196, 611, 621, 637, 647) has a third temperature control circuit which is provided inside the sacrificial member (610, 620, 630, 640).

7. The injection molding machine (10) according to any one of claims 1 to 6, further comprising:
a temperature sensor (196, 612, 622) which is provided in one of the first member and the second member; and
a controller (700) which controls the temperature adjustment mechanism (196, 611, 621, 637, 647) based on an output of the temperature sensor (196, 612, 622).

8. The injection molding machine (10) according to any one of claims 1 to 7,
wherein the first member includes a rotary table (520) to which a mold (810, 820) is attached, and
the second member includes a platen (110, 120) to which the rotary table (520) is rotatably attached.

9. The injection molding machine (10) according to claim 8,
wherein the sacrificial member (610, 620, 630, 640) is detachably fixed to the second surface of the platen (110, 120) .

10. The injection molding machine (10) according to claim 8 or 9,
wherein the first surface is located on a side opposite to a surface of the rotary table (520) to which the mold (810, 820) is attached.

11. The injection molding machine (10) according to any one of claims 8 to 10, further comprising:
a rotary mechanism (530) which includes a first gear (533) and rotates the rotary table (520),
wherein the rotary table (520) includes a second gear (535) which meshes with the first gear (533), and
the platen (110, 120) includes a restraint member (125) which restrains a movement of the second gear (535) in a direction parallel to a rotation center line (520X) of the rotary table (520) .

12. The injection molding machine (10) according to any one of claims 1 to 11,
wherein the first member (520, 910) includes a frame (910), and
the second member (120, 190) includes a carriage (190) which movably supports a platen (110, 120) on the frame (910).

## Patentansprüche

1. Spritzgießmaschine (10), umfassend:
ein erstes Element (520, 910), das eine erste Oberfläche aufweist;
ein zweites Element (120, 190), das eine zweite Oberfläche aufweist, die der ersten Oberfläche zugewandt ist; wobei die Spritzgießmaschine **dadurch gekennzeichnet ist, dass** sie ferner umfasst:
ein Opferelement (610, 620, 630, 640), das eine dritte Oberfläche aufweist, die an einer Oberfläche der ersten Oberfläche oder der zweiten Oberfläche angebracht ist und mit der anderen Oberfläche der ersten Oberfläche oder der zweiten Oberfläche gleitet; und
einen Temperatureinstellungsmechanismus (196, 611, 621, 637, 647), der eine Temperatur des Opferelements (610, 620, 630, 640) einstellt.

2. Spritzgießmaschine (10) nach Anspruch 1,
wobei das Opferelement (610, 620, 630, 640) lösbar an der ersten Oberfläche oder der zweiten Oberfläche befestigt ist.

3. Spritzgießmaschine (10) nach Anspruch 1 oder 2,
wobei das Opferelement (610, 620, 630, 640) aus einem Material hergestellt ist, das weicher ist als jenes des anderen Elements, welches die zugewandte erste Oberfläche oder zweite Oberfläche aufweist.

4. Spritzgießmaschine (10) nach einem der Ansprüche 1 bis 3,
wobei der Temperatureinstellungsmechanismus (196, 611, 621, 637, 647) einen ersten Temperaturregelkreis aufweist, der in dem ersten Element oder dem zweiten Element vorgesehen ist, an dem das Opferelement (610, 620, 630, 640) angebracht ist.

5. Spritzgießmaschine (10) nach einem der Ansprüche 1 bis 4,
wobei der Temperatureinstellungsmechanismus (196, 611, 621, 637, 647) einen zweiten Temperaturregelkreis aufweist, der in dem anderem von dem ersten Element und dem zweiten Element vorgesehen ist, an dem das Opferelement (610, 620, 630, 640) angebracht ist.

6. Spritzgießmaschine (10) nach einem der Ansprüche 1 bis 5,
wobei der Temperatureinstellungsmechanismus (196, 611, 621, 637, 647) einen dritten Temperaturregelkreis aufweist, der innerhalb des Opferelements (610, 620, 630, 640) vorgesehen ist.

7. Spritzgießmaschine (10) nach einem der Ansprüche 1 bis 6, ferner umfassend:
einen Temperatursensor (196, 612, 622), der in dem ersten Element oder dem zweiten Element vorgesehen ist; und
eine Steuerung (700), die den Temperatureinstellungsmechanismus (196, 611, 621, 637, 647) auf Grundlage einer Ausgabe des Temperatursensors (196, 612, 622) steuert.

8. Spritzgießmaschine (10) nach einem der Ansprüche 1 bis 7,
wobei das erste Element einen Drehtisch (520), an welchem eine Form (810, 820) befestigt ist, aufweist, und
das zweite Element eine Platte (110, 120) aufweist, an welcher der Drehtisch (520) drehbar befestigt ist.

9. Spritzgießmaschine (10) nach Anspruch 8, wobei das Opferelement (610, 620, 630, 640) lösbar an der zweiten Oberfläche der Platte (110, 120) angebracht ist.

10. Spritzgießmaschine (10) nach Anspruch 8 oder 9,
wobei sich die erste Oberfläche auf einer einer Oberfläche des Drehtisches (520) gegenüberliegenden Seite befindet, an der die Form (810, 820) befestigt ist.

11. Spritzgießmaschine (10) nach einem der Ansprüche 8 bis 10, ferner umfassend:
einen Drehmechanismus (530), der ein erstes Zahnrad (533) umfasst und den Drehtisch (520) dreht,
wobei der Drehtisch (520) ein zweites Zahnrad (535) umfasst, das in das erste Zahnrad (533) eingreift, und
die Platte (110, 120) ein Beschränkungselement (125) umfasst, das eine Bewegung des zweiten Zahnrads (535) in einer Richtung parallel zu einer Drehmittellinie (520X) des Drehtisches (520) beschränkt.

12. Spritzgießmaschine (10) nach einem der Ansprüche 1 bis 11,
wobei das erste Element (520, 910) einen Rahmen (910) umfasst, und
das zweite Element (120, 190) einen Schlitten (190) umfasst, der eine Platte (110, 120) an dem Rahmen (910) bewegbar trägt.

## Revendications

1. Une machine de moulage par injection (10) comprenant :
un premier élément (520, 910) qui possède une première surface ;
un second élément (120, 190) qui possède une seconde surface tournée vers la première surface ; la machine de moulage par injection étant **caractérisée en ce qu'**elle comprend en outre :
un élément sacrificiel (610, 620, 630, 640) qui possède une troisième surface fixée sur une surface de la première surface ou de la seconde surface et qui coulisse avec l'autre surface de la première surface ou de la seconde surface ; et
un mécanisme de réglage de la température (196, 611, 621, 637, 647) qui règle une température de l'élément sacrificiel (610, 620, 630, 640).

2. La machine de moulage par injection (10) selon la revendication 1, dans laquelle l'élément sacrificiel (610, 620, 630, 640) est fixé de manière amovible sur l'une de la première surface et de la seconde surface.

3. La machine de moulage par injection (10) selon la revendication 1 ou 2, dans laquelle l'élément sacrificiel (610, 620, 630, 640) est composé d'un matériau plus souple que celui de l'autre élément ayant la première surface ou la seconde surface qui fait face.

4. La machine de moulage par injection (10) selon l'une quelconque des revendications 1 à 3,
dans laquelle le mécanisme de réglage de la température (196, 611, 621, 637, 647) possède un premier circuit de régulation de la température qui est prévu dans l'un du premier élément et du second élément sur lequel l'élément sacrificiel (610, 620, 630, 640) est fixé.

5. La machine de moulage par injection (10) selon l'une quelconque des revendications 1 à 4,
dans laquelle le mécanisme de réglage de la température (196, 611, 621, 637, 647) possède un second circuit de régulation de la température qui est prévu dans l'autre du premier élément et du second élément sur lequel l'élément sacrificiel (610, 620, 630, 640) est fixé.

6. La machine de moulage par injection (10) selon l'une quelconque des revendications 1 à 5,
dans laquelle le mécanisme de réglage de la température (196, 611, 621, 637, 647) possède un troisième circuit de régulation de la température qui est prévu à l'intérieur de l'élément sacrificiel (610, 620, 630, 640).

7. La machine de moulage par injection (10) selon l'une quelconque des revendications 1 à 6, comprenant en outre :
un capteur de température (196, 612, 622) qui est prévu dans l'un du premier élément et du second élément ; et
un régulateur (700) qui régule le mécanisme de réglage de la température (196, 611, 621, 637, 647) sur la base d'un résultat du capteur de température (196, 612, 622).

8. La machine de moulage par injection (10) selon l'une quelconque des revendications 1 à 7,
dans laquelle le premier élément comprend un plateau tournant (520) sur lequel un moule (810, 820) est fixé, et
le second élément comprend une platine (110, 120) sur laquelle le plateau tournant (520) est fixé de manière rotative.

9. La machine de moulage par injection (10) selon la revendication 8, dans laquelle l'élément sacrificiel (610, 620, 630, 640) est fixé de manière amovible sur la seconde surface de la platine (110, 120).

10. La machine de moulage par injection (10) selon la revendication 8 ou 9,
dans laquelle la première surface est située sur un côté opposé à une surface du plateau tournant (520) sur lequel le moule (810, 820) est fixé.

11. La machine de moulage par injection (10) selon l'une quelconque des revendications 8 à 10, comprenant en outre :
un mécanisme rotatif (530) qui comprend un premier engrenage (533) et fait pivoter le plateau tournant (520),
dans laquelle le plateau tournant (520) comprend un second engrenage (535) qui s'accouple avec le premier engrenage (533), et
la platine (110, 120) comprend un élément de retenue (125) qui limite un mouvement du second engrenage (535) dans une direction parallèle à une ligne centrale de rotation (520X) du plateau tournant (520).

12. La machine de moulage par injection (10) selon l'une quelconque des revendications 1 à 11,
dans laquelle le premier élément (520, 910) comprend un châssis (910), et le second élément (120, 190) comprend un chariot (190) qui supporte de manière mobile une platine (110, 120) sur le châssis (910).
